# EUROPEAN PATENT APPLICATION

(11) **EP 4 502 286 A1**
(43) Date of publication of application: **05.02.2025**
(21) Application number: 23779848.3
(22) Date of filing: 20.03.2023
(51) Int. Cl.: E02F 9/00, B60K 1/04, B60K 11/04, F01P 3/12, F01P 3/18, F01P 3/20, F01P 5/02, F01P 7/04, F01P 11/10

(54) **SWIVELING WORK MACHINE**

(30) Priority: 31.03.2022 JP 2022060024; 31.03.2022 JP 2022060022; 31.03.2022 JP 2022060023; 31.03.2022 JP 2022060025
(71) Applicant: KUBOTA CORPORATION, Osaka-shi, Osaka 556-8601 (JP)
(72) Inventor: ITO Junki, Sakai-shi, Osaka 590-0908 (JP); SATO Fuminori, Sakai-shi, Osaka 590-0908 (JP); DATE Masamitsu, Sakai-shi, Osaka 590-0908 (JP); YOSHIOKA Yuya, Sakai-shi, Osaka 590-0908 (JP)
(74) Representative: Cabinet Beau de Loménie
(86) International application number: PCT/JP2023/010917
(87) International publication number: WO 2023/189832

(57) **Abstract**

Provided is a swivel working machine (1) that can improve cooling air exhaust performance and performance of cooling using cooling air.

The swivel working machine (1) includes an exterior cover (70) to define a space where device(s) is/are provided on a swivel base (2), an inspection door (76) openably and closably provided in the exterior cover (70) and including an air exit portion (77), a fan (F) to discharge cooling air sucked from an interior of a machine body toward the air exit portion (77), a heat exchanger (CA) to cool a to-be-cooled target using cooling air sucked by the fan (F), and a shroud (110) to surround the fan (F) and guide cooling air generated by the fan (F), and the inspection door (76) is configured such that, when the inspection door (76) in a closed state, duct to guide cooling air generated by the fan (F) to the air exit portion (77) is defined by an opening edge portion (110a) of the shroud (110) making contact with a portion of the inspection door (76) that surrounds the air exit portion (77).

## Description

### Technical Field

The present invention relates to a swivel working machine such as a backhoe.

### Background Art

A swivel working machine disclosed in Patent Literature 1 includes a swivel base, a working device provided on a front portion of the swivel base, a battery unit, an electric motor that is driven by electric power output by the battery unit, a hydraulic pump that delivers a hydraulic fluid by driving of the electric motor, a radiator fan and an oil cooler fan that are driven by electric power output by the battery unit, a radiator that cools cooling water by cooling air generated by the radiator fan, and an oil cooler that cools the hydraulic fluid by cooling air generated by the oil cooler fan.

### Citation List

### Patent Literature

PTL 1: Japanese Unexamined Patent Application Publication No. 2021-80704

### Summary of Invention

### Technical Problem

The swivel working machine of Patent Literature 1 includes an oil cooler unit including an oil cooler and an oil cooler fan, a radiator unit including a radiator and a radiator fan, and a shroud that surrounds the oil cooler unit and the radiator unit. The radiator fan sucks in air around the radiator, and the oil cooler fan sucks in air around the oil cooler. The air thus sucked (i.e., cooling air) is discharged to an outside through an opening of an exterior cover by being guided by the shroud, but part of the cooling air is accumulated or circulates inside the exterior cover without being discharged to the outside. This leaves rooms for improvement concerning cooling air exhaust performance and performance of cooling using cooling air.

The present invention was attained to solve such a problem of the conventional art, and an object of the present invention is to provide a swivel working machine that can improve cooling air exhaust performance and performance of cooling using cooling air. Solution to Problem

A swivel working machine according to an aspect of the present invention includes a swivel base; a working device provided on the swivel base; an exterior cover to define a space where one or more devices are provided on the swivel base; an inspection door openably and closably provided in the exterior cover and including an air exit portion; a cooling unit including a fan to discharge cooling air sucked from an interior of a machine body toward the air exit portion and a heat exchanger to cool a to-be-cooled target using cooling air sucked by the fan; and a shroud to surround the fan and guide cooling air generated by the fan, the inspection door is configured such that, when the inspection door is in a closed state, a duct to guide cooling air generated by the fan to the air exit portion is defined by an opening edge portion of the shroud making contact with a portion of the inspection door that surrounds the air exit portion.

The inspection door may include, on an inner side thereof, an elastic body provided at the portion that surrounds the air exit portion, and the elastic body may be configured to, when the inspection door is in the closed state, be elastically deformed upon contact with the opening edge portion of the shroud to seal a contact area between the inspection door and the opening edge portion of the shroud.

The heat exchanger may include a radiator to cool cooling water to cool a to-be-cooled device and an oil cooler to cool hydraulic fluid to drive the working device, and the radiator and the oil cooler may be arranged side by side on one surface of a rectangular frame body in parallel to an opening of the frame body, the fan may include a radiator fan to cool the radiator and an oil cooler fan to cool the oil cooler, and the radiator fan and the oil cooler fan may be arranged side by side in parallel to the opening of the frame body, and the shroud may include a tubular fixed portion to surround both the radiator fan and the oil cooler fan and a guide portion extending from the fixed portion toward the air exit portion to guide cooling air generated by driving of the radiator fan and cooling air generated by driving of the oil cooler fan.

The fixed portion may include a rectangular-tubular frame including an upper edge portion, a left edge portion, a lower edge portion, and a right edge portion, and both the radiator fan and the oil cooler fan may be surrounded by the rectangular-tubular frame, and the fixed portion may include, at the lower edge portion, a first elastic support body to support a case lower portion corresponding to the radiator fan and support a case lower portion corresponding to the oil cooler fan.

The lower edge portion may include a first cutout portion in an area corresponding to the case lower portion corresponding to the radiator fan and a second cutout portion in an area corresponding to the case lower portion corresponding to the oil cooler fan, and the first elastic support body may be provided in the first cutout portion, and the second elastic support body may be provided in the second cutout portion.

The fixed portion may be a rectangular-tubular frame including an upper edge portion, a left edge portion, a lower edge portion, and a right edge portion, and both the radiator fan and the oil cooler fan may be surrounded by the rectangular-tubular frame, the air exit portion may be sized to extend downward to a greater extent than an opening of the fixed portion, the guide portion may include a downwardly-sloping extension portion extending diagonally outward and downward from an edge of the lower edge portion of the fixed portion, and the downwardly-sloping extension portion may make contact with at least one of a lower edge portion of the air exit portion or an area radially outward of the lower edge portion.

The guide portion may include a right-side extension portion bent from an edge of the right edge portion of the fixed portion and extending in a radially inward direction of the opening of the fixed portion, the inspection door may include an opening/closing shaft to allow the inspection door to be opened and closed with respect to the exterior cover, and the opening/closing shaft may be provided at a position on the exterior cover that corresponds to the right edge portion of the fixed portion, and the right-side extension portion may project from the fixed portion to a lesser extent than the downwardly-sloping extension portion.

The swivel working machine may further include a battery unit; an electric motor to be driven by electric power output by the battery unit; a hydraulic pump to be driven by the electric motor to deliver hydraulic fluid; a controller to control operation of the electric motor; and a detector to detect opening and closing of the inspection door, and, the controller may, when the detector detects an open state of the inspection door, drive the electric motor at a rotational speed lower than when the inspection door is in the closed state.

The swivel working machine may further include a detector to detect opening and closing of the inspection door; and a controller to control driving of the fan, and the controller may stop rotation of the fan when the detector detects an open state of the inspection door.

The radiator may include, in an upper portion thereof, a water supply portion to be supplied with cooling water, and the exterior cover may include a detachable lid portion in an area corresponding to the water supply portion independently of the inspection door.

The swivel working machine may further include an inverter to regulate electric power to be output to the electric motor, and the battery unit may be provided at a rear portion of the swivel base, the inverter may be provided above the battery unit, the electric motor may be provided at one side of the battery unit, and the heat exchanger and the fan may be provided above the electric motor.

The exterior cover may include an upper cover detachably attached to a support frame provided on the swivel base to cover the inverter and the battery unit.

A swivel working machine according to an aspect of the present invention includes a swivel base, a working device provided on the swivel base, an exterior cover to define a space where one or more devices are provided on the swivel base, an air exit portion provided at a position on the exterior cover that is located on one side of the machine body, and a cooling unit provided in the space such that the cooling unit faces the air exit portion, wherein the cooling unit includes a frame body having an opening, a heat exchanger provided at a position on the frame body that corresponds to the opening of the frame body such that the heat exchanger faces toward the air exit portion, a fan provided at the same side of the heat exchanger as the air exit portion such that an air intake side of the fan faces toward the heat exchanger and an air exit side of the fan faces toward the air exit portion, and a mount portion provided on the opposite side of the frame body from the heat exchanger to detachably attach a filter thereto, the filter being configured to catch dust in air sucked toward the opening by the fan.

The exterior cover may include an inspection door that is openable and closable, and the mount portion may be positioned to allow the filter to be attached and detached when the inspection door is open.

The swivel working machine may be configured such that the air exit portion is provided in the inspection door.

The mount portion may have an attachment/detachment opening through which the filter is inserted and removed, and when the inspection door is in an open state, the attachment/detachment opening of the mount portion may be exposed to allow the filter to be attached and detached to and from the mount portion through the attachment/detachment opening.

The heat exchanger may include a radiator to cool cooling water to cool a to-be-cooled device and an oil cooler to cool hydraulic fluid to drive the working device which are arranged side by side in parallel to the opening of the frame body, the fan may include a radiator fan to suck air through the radiator and an oil cooler fan to suck air through the oil cooler, the filter may include a first filter for the radiator and a second filter for the oil cooler, and the first filter may be attached to a position on the mount portion that corresponds to the radiator, and the second filter may be attached to a position on the mount portion that corresponds to the oil cooler.

The mount portion may include an attachment/detachment opening to allow the filter to be inserted and removed therethrough, a dimension of the attachment/detachment opening in a longitudinal direction may be shorter than a total dimension of the first filter and the second filter in an arrangement direction which is a direction in which the first filter and the second filter are arranged and may be longer than each of a dimension of the first filter and a dimension of the second filter, the mount portion may include a first holding portion to hold, at a first position away from the attachment/detachment opening, one of the first filter and the second filter that has been inserted through the attachment/detachment opening such that the one of the filter and the second filter is slidable in the arrangement direction, and a second holding portion to hold the other of the first filter and the second filter that has been inserted through the attachment/detachment opening with the first filter and the second filter held by the first holding portion.

The first filter and the second filter may each include a grip portion to be gripped when a corresponding one of the first and second filters is attached to or detached from the mount portion.

The grip portion of the first filter and the grip portion of the second filter may each include a flange portion bent from a distal end of an extension portion projecting upward relative to the attachment/detachment opening with the first filter and the second filter attached to the mount portion, and include, in the flange portion, a fixing tool to be used to fix the flange portion to the mount portion.

The swivel working machine may be configured such that, in a case where the other of the first filter and the second filter is inserted through the attachment/detachment opening before the one of the first filter and the second filter, even if the other of the first filter and the second filter is to be slid toward the first position in the arrangement direction, the flange portion of the other of the first filter and the second filter contacts the attachment/detachment opening at a position where an available dimension, which is a dimension in the longitudinal direction of the attachment/detachment opening excluding a portion where the other of the first filter and the second filter is positioned, is shorter than a dimension of the one of the first filter and the second filter in the arrangement direction, and the other of the first filter and the second filter is prevented from sliding toward the first position.

The swivel working machine may include a battery unit, an electric motor to be driven by electric power output by the battery unit, an inverter to adjust electric power to be output to the electric motor, and a water cooling path to allow cooling water to circulate from the radiator back to the radiator after passing through at least one of the inverter, the electric motor, or the battery unit.

The battery unit may be provided at a rear portion of the swivel base, the inverter may be provided above the battery unit, the electric motor may be provided at one side of the battery unit, and the heat exchanger and the fan may be provided above the electric motor.

The swivel working machine may include a hydraulic pump to be driven by the electric motor to deliver hydraulic fluid, the electric motor and the hydraulic pump may be arranged in a front-rear direction at one side of the battery unit, and the heat exchanger and the fan may be provided above the electric motor and the hydraulic pump.

The exterior cover may include an air intake port in an opposite side of the exterior cover from a side in which the air exit portion is positioned.

A swivel working machine according to an aspect of the present invention includes a swivel base, a working device provided on the swivel base, a battery unit, a fan to suck air from the battery unit side, a cooling unit including a heat exchanger to cool a to-be-cooled target using air sucked by the fan, a detector to detect whether the battery unit is in a charged state or in a discharged state, and a controller to control driving of the fan, wherein the controller drives the fan at a predetermined first rotational speed when the detector detects the charged state of the battery unit.

The swivel working machine may include an electric motor to be driven by electric power output by the battery unit and a hydraulic pump to driven by the electric motor to deliver hydraulic fluid, the cooling unit may include (i) a first cooling unit including a radiator fan to suck air from the battery unit side and a radiator to cool cooling water to cool a to-be-cooled device using air sucked by the radiator fan and (ii) a second cooling unit including an oil cooler fan to suck air from the battery unit side and an oil cooler to cool hydraulic fluid using air sucked by the oil cooler fan, and the controller may drive at least one of the radiator fan or the oil cooler fan at the first rotational speed when the detector detects the charged state of the battery unit.

The swivel working machine may include a temperature detector to detect a temperature of the battery unit, and the controller may, when the detector detects the charged state of the battery unit, drive the fan at the first rotational speed if the temperature of the battery unit detected by the temperature detector is equal to or higher than a set temperature and not drive the fan if the temperature of the battery unit is less than the set temperature.

The predetermined first rotational speed may be a rotational speed lower than a second rotational speed of the fan that is set to cool the to-be-cooled target when the battery unit is in the discharged state.

The swivel working machine may include a fluid temperature detector to detect a temperature of hydraulic fluid and a shroud to surround both the radiator fan and the oil cooler fan and guide cooling air generated by the radiator fan and the oil cooler fan, the shroud may include a partition wall to separate the radiator fan and the oil cooler fan, and the controller may, when the detector detects the charged state of the battery unit, stop driving of the oil cooler fan and continue to drive the radiator fan at the first rotational speed if the temperature of hydraulic fluid detected by the fluid temperature detector is equal to or less than a predetermined value.

The swivel working machine may include a fluid temperature detector to detect a temperature of hydraulic fluid, and the controller may, when the detector detects the discharged state of the battery unit, control driving of the oil cooler fan based on the temperature of hydraulic fluid detected by the fluid temperature detector.

The swivel working machine may include a water temperature detector to detect a temperature of cooling water, and the controller may, when the detector detects the discharged state of the battery unit, control driving of the radiator fan based on the temperature of cooling water detected by the water temperature detector.

The swivel working machine may include an electric motor to be driven by electric power output by the battery unit, an inverter to regulate electric power to be output to the electric motor, and a water cooling path to allow cooling water to circulate from the radiator back to the radiator after passing through at least the inverter and the electric motor.

The battery unit may be provided at a rear portion of the swivel base, the inverter may be provided above the battery unit, a hydraulic pump to be driven by the electric motor to deliver hydraulic fluid may be provided, the electric motor and the hydraulic pump may be arranged in the front-rear direction at one side of the battery unit, and the radiator and the oil cooler as well as the radiator fan and the oil cooler fan may be provided above the electric motor and the hydraulic pump.

The swivel working machine may include an exterior cover to cover a space where the battery unit, the radiator fan, and the oil cooler fan are provided, the exterior cover may include an air exit portion, the radiator fan and the oil cooler fan may be positioned such that an air intake side thereof faces toward the battery unit and an air exit side thereof faces toward the air exit portion, and discharge air sucked from the battery unit side to an outside of the machine body through the air exit portion.

A swivel working machine according to an aspect of the present invention includes a swivel base, a working device provided on the swivel base, and a cooling unit, wherein the cooling unit is a combined unit of a frame body having an opening, a heat exchanger attached to one side of the frame body at a position corresponding to the opening, a fan unit provided at the opposite side of the heat exchanger from the frame body such that an air intake side thereof faces toward the heat exchanger, and a shroud to guide exhaust air from the fan unit, and the cooling unit is attached to a fixing bracket provided on a support frame provided on the swivel base.

The fixing bracket may include a temporary placement portion on which the cooling unit is temporarily placed during work of attaching the cooling unit.

The temporary placement portion may be positioned such that a height position of the temporarily placed cooling unit matches a height at which the cooling unit is attached to the fixing bracket.

The frame body may include a fixed portion which is fixed to the fixing bracket with a fastener to fix the cooling unit to the fixing bracket, and the fixed portion may be positioned such that the fixed portion does not to overlap the heat exchanger, the fan unit, or the shroud when viewed from an air exit side of the cooling unit.

The heat exchanger may include a radiator to cool cooling water to cool a to-be-cooled device and an oil cooler to cool hydraulic fluid to drive the working device, the fan unit may include a radiator fan to cool the radiator, an oil cooler fan to cool the oil cooler, and an attachment frame to which the radiator fan and the oil cooler fan are attached adjacent to each other, the radiator and the oil cooler may be attached adjacent to each other and in parallel to the opening of the frame body, the fan unit may be attached to one side of the frame body such that an air intake side of the radiator fan faces the radiator and an air intake side of the oil cooler fan faces the oil cooler, and the shroud may be attached to the attachment frame of the fan unit such that the shroud surrounds both the radiator fan and the oil cooler fan.

The cooling unit may have attached thereto at least one of a hose for cooling water connected to the radiator or a hose for hydraulic fluid connected to the oil cooler.

The swivel working machine may be configured such that a mount portion where a filter to catch dust in air sucked by the fan unit is attached is provided on the opposite side of the frame body from the one side.

The filter may include a first filter for the radiator and a second filter for the oil cooler, and the first filter and the second filter may be arranged side by side in parallel to the opening of the frame body.

The cooling unit may include an attachment portion to which a hoisting tool is attached.

The swivel working machine may include a battery unit, an electric motor to be driven by electric power output by the battery unit, and a hydraulic pump to be driven by the electric motor to deliver hydraulic fluid, the electric motor and the hydraulic pump may be provided at one side of the battery unit, and the cooling unit may be provided at the one side of the battery unit and above the hydraulic pump and the electric motor.

The swivel working machine may include an exterior cover to cover the cooling unit, the battery unit, the electric motor, and the hydraulic pump and an inspection door openable and closable with respect to the exterior cover and including the air exit portion, and the fan unit may discharge air through the air exit portion outward in a width direction from a space defined by the exterior cover.

The swivel working machine may include an exterior cover to define a space where one or more devices are provided on the swivel base and an inspection door openable and closable with respect to the exterior cover and including an air exit portion, and the inspection door may be configured such that, when the inspection door is in a closed state, a duct to guide the cooling air generated by the fan to the air exit portion is defined by an opening edge portion of the shroud that faces the air exit portion making contact with a portion of the inspection door that surrounds the air exit portion.

### Advantageous Effects of Invention

With the swivel working machine, it is possible to improve cooling air exhaust performance and performance of cooling using cooling air.

### Brief Description of Drawings

[FIG. 1] FIG. 1 is a schematic side view illustrating a swivel working machine.
[FIG. 2] FIG. 2 is a schematic plan view illustrating the swivel working machine.
[FIG. 3] FIG. 3 is a schematic back view illustrating the swivel working machine.
[FIG. 4] FIG. 4 is a front left perspective view illustrating a swivel base.
[FIG. 5] FIG. 5 is a rear right perspective view illustrating the swivel base.
[FIG. 6] FIG. 6 is a plan view illustrating a lower traveling body, a swivel board, various devices provided on the swivel board, and the like.
[FIG. 7] FIG. 7 is a front right perspective view illustrating the swivel board, a battery unit, an electric motor, a hydraulic pump, and electric components.
[FIG. 8] FIG. 8 is a block diagram illustrating a system of the swivel working machine.
[FIG. 9] FIG. 9 is a rear right perspective view illustrating the swivel board, the battery unit, the electric components, and a cooling unit.
[FIG. 10] FIG. 10 is a rear right perspective view illustrating the swivel base, a protection mechanism, and an exterior cover.
[FIG. 11] FIG. 11 is an exploded perspective view illustrating attachment of the cooling unit to a support frame.
[FIG. 12] FIG. 12 is a back view illustrating a state where the cooling unit has been attached to the support frame.
[FIG. 13] FIG. 13 is a front right perspective view illustrating a state where the cooling unit has been attached to the support frame.
[FIG. 14] FIG. 14 is a back view illustrating a height position of the cooling unit.
[FIG. 15] FIG. 15 is an exploded perspective view of the cooling unit.
[FIG. 16] FIG. 16 illustrates the cooling unit viewed from an air exit side.
[FIG. 17] FIG. 17 is a plan view of the cooling unit.
[FIG. 18] FIG. 18 illustrates the cooling unit viewed from an air intake side.
[FIG. 19] FIG. 19 is a perspective view illustrating an oil cooler and a radiator that have been attached to a frame body of the cooling unit.
[FIG. 20] FIG. 20 is a perspective view illustrating a shroud.
[FIG. 21] FIG. 21 is a horizontal cross-sectional view of the shroud.
[FIG. 22] FIG. 22 is an enlarged plan view of a right hood in a state where an inspection door illustrated in FIG. 10 is opened.
[FIG. 23] FIG. 23 is a perspective view of the cooling unit for explaining attachment and detachment of a second filter.
[FIG. 24] FIG. 24 is a view for explaining an order of attachment and detachment of a first filter and the second filter.
[FIG. 25] FIG. 25 illustrates a case where the first filter cannot be mounted since the second filter is mounted earlier.
[FIG. 26] FIG. 26 illustrates a water cooling path for the radiator.
[FIG. 27] FIG. 27 illustrates a duct configuration formed by the shroud of the cooling unit and the inspection door.
[FIG. 28] FIG. 28 is a horizontal cross-sectional view of the right hood illustrating a duct configuration formed by the shroud of the cooling unit and the inspection door.
[FIG. 29] FIG. 29 is a vertical cross-sectional view of the right hood illustrating a duct configuration formed by the shroud of the cooling unit and the inspection door.
[FIG. 30] FIG. 30 illustrates an inner surface side of the inspection door.
[FIG. 31] FIG. 31 is a flowchart illustrating processing for controlling a radiator fan and an oil cooler fan.
[FIG. 32] FIG. 32 is a horizontal cross-sectional view of the right hood illustrating a duct configuration formed by the shroud of the cooling unit and the inspection door according to a first variation.
[FIG. 33] FIG. 33 is a flowchart illustrating control processing according to the first variation.
[FIG. 34] FIG. 34 is a flowchart illustrating control processing according to a second variation.

### Description of Embodiments

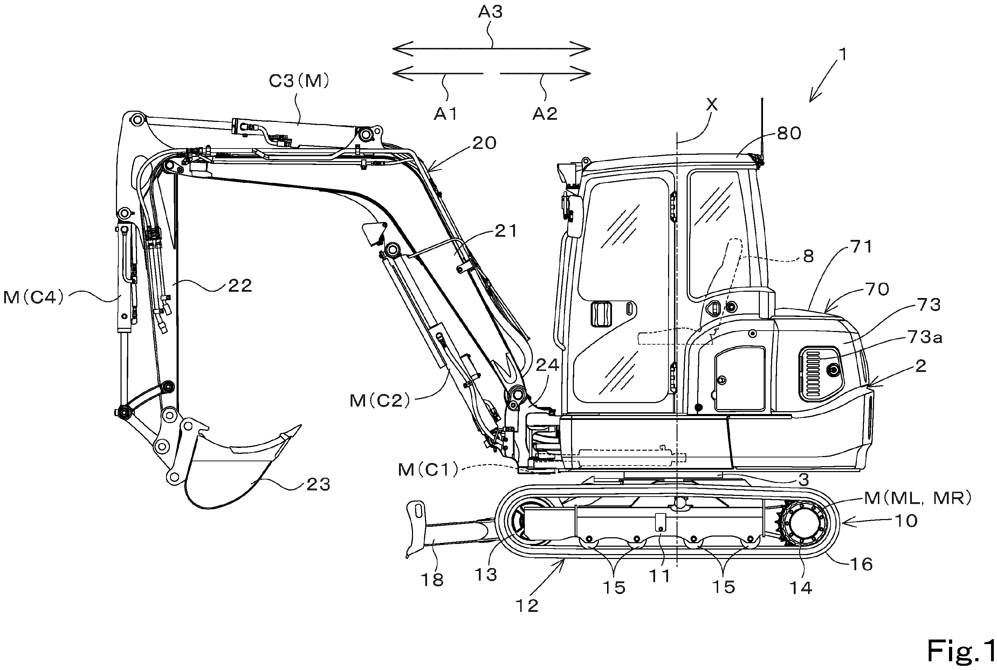

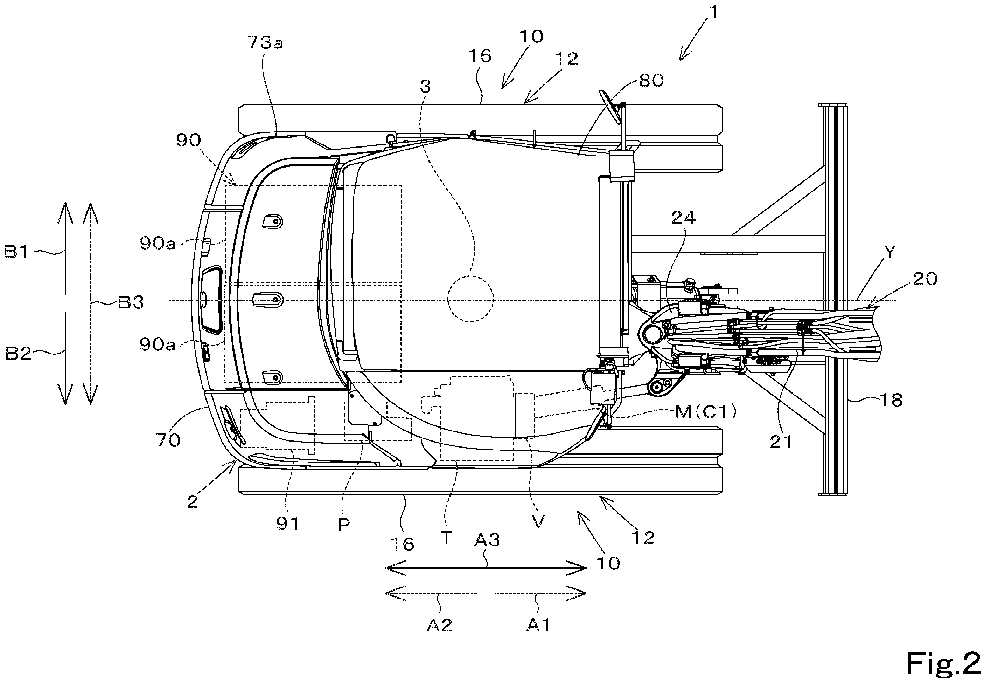

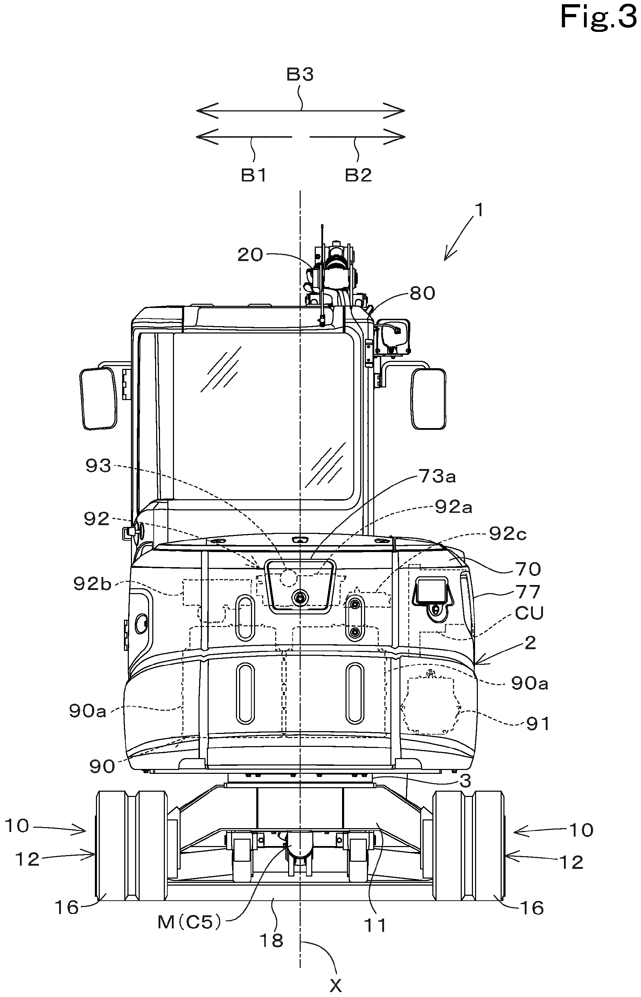

An embodiment of the present invention is described below with reference to the drawings. FIG. 1 is a schematic side view illustrating a swivel working machine 1. FIG. 2 is a schematic plan view illustrating the swivel working machine 1. FIG. 3 is a schematic back view illustrating the swivel working machine 1. First, an overall configuration of the swivel working machine 1 is described. As illustrated in FIG. 1, the swivel working machine 1 is a backhoe or the like that includes a swivel base (machine body) 2, a lower traveling body 10, and a working device 20. The swivel working machine 1 is an electric working machine that is driven by electric power. A seat 8 on which a user sits is provided on the swivel base 2. The seat 8 is, for example, covered with a protection mechanism 80 such as a cabin.

In the present embodiment, a direction (a direction indicated by arrow A1 in FIGS. 1 and 2 and other drawings) in which the user sitting on the seat 8 of the swivel working machine 1 faces is referred to as a forward direction, an opposite direction (a direction indicated by arrow A2 in FIGS. 1 and 2 and other drawings) is referred to as a rearward direction, a left side as viewed from the user (a near side in FIG. 1, a direction indicated by arrow B1 in FIGS. 2 and 3 and other drawings) is referred to as a leftward direction, and a right side as viewed from the user (a far side in FIG. 1, a direction indicated by arrow B2 in FIGS. 2 and 3 and other drawings) is referred to as a rightward direction. Furthermore, a horizontal direction orthogonal to a front-rear direction A3 is referred to as a width direction B3 (see FIGS. 2 and 3). A direction pointing rightward or leftward from a central portion in the width direction B3 of the swivel base 2 is referred to as an outward direction in the width direction. A manual operator 5 that can be operated is provided around the seat 8, and the swivel working machine 1 is operated by operating the manual operator 5.

The swivel base 2 is rotatable about a swivel axis (vertical axis) X extending in an up-down direction. Specifically, the swivel base 2 is supported on the lower traveling body 10 with a swivel bearing 3 interposed therebetween so as to be rotatable (capable of swiveling leftward and rightward) about the swivel axis X1. A center of the swivel bearing 3 is the swivel axis X (swivel center), and a swivel motor (not illustrated), which will be described later, is attached to the swivel base 2. This swivel motor is hydraulic equipment M that is driven by a hydraulic fluid delivered by the hydraulic pump P and is a motor that drives the swivel base 2 to rotate about the swivel axis X. An exterior cover (cover) 70, a bracket, a stay, and the like are provided on the swivel base 2. The exterior cover 70 forms, in a rear portion of the swivel base 2, a space (rear room R) where devices, tanks, other components, and the like are provided. The bracket, the stay, and the like are members to which the above components and the like are attached.

As illustrated in FIGS. 1 and 2, the lower traveling body 10 includes a traveling frame 11 and a traveling mechanism 12. The traveling frame (truck frame) 11 is a structure to which the traveling mechanism 12 is attached and on which the swivel base 2 is supported.

The traveling mechanism 12 is, for example, a crawler type. The traveling mechanism 12 includes an idler 13, a drive wheel 14, a plurality of track rollers 15, an endless crawler belt 16, and traveling system hydraulic equipment M (traveling motors ML and MR) that is driven by a hydraulic fluid delivered by the hydraulic pump P. The traveling motors ML and MR are hydraulic motors and circulate the crawler belt 16 in a circumferential direction by driving the drive wheel 14. A dozer device 18 that is driven up and down by extension and retraction of a dozer cylinder C5 (M), which is a hydraulic cylinder (hydraulic actuator), is attached to a front portion of the lower traveling body 10.

As illustrated in FIGS. 1 and 2, the working device 20 is provided on a front portion of the swivel base 2. As illustrated in FIG. 1, the working device 20 includes a boom 21, an arm 22, and a bucket (working tool) 23. A base end portion of the boom 21 is pivotally attached to a swing bracket 24 so as to be rotatable about a horizontal axis (an axis extending in the width direction B3), and the boom 21 is swingable in the up-down direction (vertical direction). The arm 22 is pivotally attached to a front end portion of the boom 21 so as to be rotatable about the horizontal axis, and the arm 22 is swingable in the front-rear direction or the up-down direction. The bucket 23 is provided on a front end portion of the arm 22 so as to be capable of performing a shoveling action and a dumping action. Instead of or in addition to the bucket 23, another working tool (hydraulic attachment) that can be driven by a hydraulic fluid can be attached to the swivel working machine 1. Examples of such a working tool include a hydraulic breaker, a hydraulic crusher, an angle broom, an earth auger, a pallet fork, a sweeper, a mower, and a snow blower.

As illustrated in FIG. 1, the swivel working machine 1 includes a working system hydraulic equipment M that operates by a hydraulic fluid delivered by the hydraulic pump P, and the working device 20 is driven by operation of the working system hydraulic equipment M. In the present embodiment, the hydraulic equipment M includes a swing cylinder C1, a boom cylinder C2, an arm cylinder C3, and a bucket cylinder C4. The swing cylinder C1, the boom cylinder C2, the arm cylinder C3, and the bucket cylinder C4 are hydraulic cylinders (hydraulic actuators). As illustrated in FIG. 1, the swing bracket 24 is swingable by extraction and retraction of the swing cylinder C1 provided on a right portion of the swivel base 2. The boom 21 is swingable by extraction and retraction of the boom cylinder C2. The arm 22 is swingable by extraction and retraction of the arm cylinder C3. The bucket 23 is capable of performing a shoveling action and a dumping action by extraction and retraction of the bucket cylinder C4.

Accordingly, the hydraulic equipment M provided in the swivel working machine 1 is the swivel motor, the traveling motors ML and MR, the swing cylinder C1, the boom cylinder C2, the arm cylinder C3, and the bucket cylinder C4. Furthermore, the hydraulic equipment M includes a control valve V that controls the hydraulic cylinders and a hydraulic fluid tank T. As illustrated in FIG. 2, the hydraulic fluid tank T and the control valve V are provided forward of the hydraulic pump P.

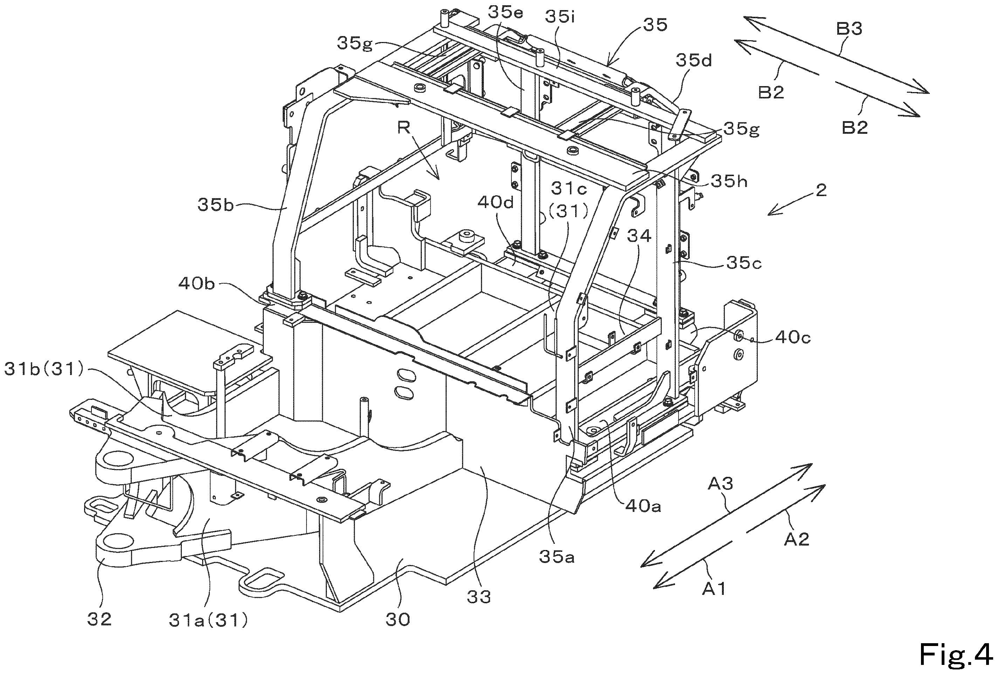

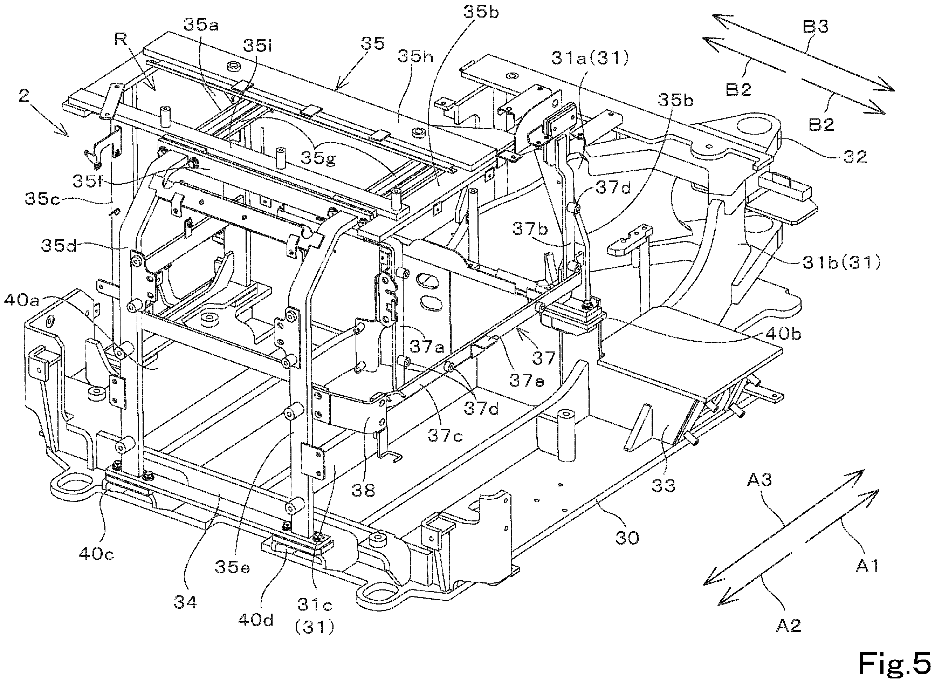

The swivel base 2 is described below. FIG. 4 is a front left perspective view illustrating the swivel base 2. FIG. 5 is a rear right perspective view illustrating the swivel base 2. As illustrated in FIGS. 4 and 5, the swivel base 2 includes a swivel board (board) 30, a plurality of longitudinal ribs 31 (a first longitudinal rib 31a, a second longitudinal rib 31b, and a third longitudinal rib 31c), a support bracket 32, a partition plate 33, a lateral rib 34, and a support frame 35. The swivel board 30 is formed from a thick steel plate and is provided so that plate surfaces thereof face upward or downward. The swivel board 30 is supported on the lower traveling body 10 with the swivel bearing 3 interposed therebetween so as to be rotatable about the swivel axis X.

The first longitudinal rib 31a, the second longitudinal rib 31b, and the third longitudinal rib 31c are members that reinforce the swivel board 30 and extend in the front-rear direction A3 of the swivel board 30. The first longitudinal rib 31a and the second longitudinal rib 31b stand on the swivel board 30 and are arranged apart from each other in the width direction B3. The first longitudinal rib 31a is provided on a left portion of the swivel board 30, and the second longitudinal rib 31b is provided on a right portion of the swivel board 30. The third longitudinal rib 31c is provided between the first longitudinal rib 31a and the second longitudinal rib and extend from a rear portion of the swivel board 30 to the partition plate 33.

The support bracket 32 is provided on front portions of the first longitudinal rib 31a and the second longitudinal rib 31b. As illustrated in FIG. 4, the support bracket 32 and the front portions of the first longitudinal rib 31a and the second longitudinal rib 31b are deviated rightward from a center of the swivel board 30 in the width direction B3. As illustrated in FIG. 1, the swing bracket 24 is attached to the support bracket 32 so as to be swingable about a vertical axis (an axis extending in the up-down direction).

The partition plate 33 is a member that forms a lower portion of a front surface of the rear room R. The partition plate 33 is provided in a central portion of the swivel board 30 from one side (left side) to the other side (right side) in the width direction B3 so that plate faces thereof face the front-rear direction A3.

The lateral rib 34 is a member for reinforcing the swivel board 30 and is provided on a rear end portion of the swivel board 30 from one side (left side) to the other side (right side) in the width direction B3. The lateral rib 34 stands on the swivel board 30 and is coupled to a rear end of the first longitudinal rib 31a, a rear end of the second longitudinal rib 31b, and a rear end of the third longitudinal rib 31c.

The support frame 35 stands on a rear portion of the swivel board 30 so as to be located rearward of the partition plate 33. For example, the support frame 35 has an arch shape. A rear portion of the support frame 35 is located rearward of a rear portion of the lower traveling body 10. Specifically, the support frame 35 is provided in the rear room R and supports the exterior cover 70 and peripheral components provided inside the exterior cover 70. The support frame 35 includes a plurality of leg members (a first leg 35a, a second leg 35b, a third leg 35c, a fourth leg 35d, and a fifth leg 35e) standing on the swivel board 30, a first rod member 35h, and a second rod member 35i.

The first leg 35a stands on a front left portion of the rear room R. The first leg 35a stands on a front portion of a first base portion 40a provided on the left of a rear portion of the first longitudinal rib 31a. The first base portion 40a extends from the partition plate 33 to the lateral rib 34. A lower end portion of the first leg 35a extends upward from the first base portion 40a and an intermediate portion of the first leg 35a extends upward toward the rear, and the first leg 35a is bent so that an upper end portion thereof extends rearward.

The second leg 35b stands on a front right portion of the rear room R. The second leg 35b stands on a second base portion 40b attached on the right of a rear portion of the partition plate 33. That is, a lower end portion of the second leg 35b is located forward relative to the lower end portion of the first leg 35a. The lower end portion of the second leg 35b extends upward from the second base portion 40b and an intermediate portion of the second leg 35b extends upward toward the rear, and the second leg 35b is bent so that an upper end portion thereof extends rearward.

The third leg 35c stands on a rear left portion of the rear room R. The third leg 35c stands on a central portion of the first base portion 40a. A lower end portion of the third leg 35c extends upward from the first base portion 40a, and the third leg 35c reaches the upper end portion of the first leg 35a.

The fourth leg 35d stands on a rear portion of the rear room R. The fourth leg 35d is deviated to the left on the rear portion of the rear room R and is provided inward (rightward) of the third leg 35c in the width direction. The fourth leg 35d stands on a third base portion 40c provided on a left portion of the lateral rib 34. A lower end portion of the fourth leg 35d extends upward from the third base portion 40c and an intermediate portion of the fourth leg 35d extends upward toward the front, and the fourth leg 35d is bent so that an upper end portion thereof extends forward.

The fifth leg 35e stands on a rear portion of the rear room R. The fifth leg 35e is deviated to the right on the rear portion of the rear room R. The fifth leg 35e stands on a fourth base portion 40d provided on a right portion of the lateral rib 34. A lower end portion of the fifth leg 35e extends upward from the fourth base portion 40d and an intermediate portion of the fifth leg 35e extends upward toward the front, and the fifth leg 35e is bent so that an upper end portion thereof extends forward. The upper end portion of the fourth leg 35d and the upper end portion of the fifth leg 35e are coupled by a coupling plate 35f extending in the width direction B3. A pair of support pillars 35g extending forward from a front end portion of the coupling plate 35f are provided on the coupling plate 35f. The pair of support pillars 35g are spaced apart from each other in the width direction B3 and are provided corresponding to the upper end portion of the fourth leg 35d and the upper end portion of the fifth leg 35e, respectively. A rear portion of the fourth leg 35d and a rear portion of the fifth leg 35e are located rearward of a rear portion of the lower traveling body 10.

The first rod member 35h and the second rod member 35i extend in the width direction B3 so that plate faces thereof face the up-down direction. The first rod member 35h is provided forward of the second rod member 35i. The first rod member 35h and the second rod member 35i are placed over and are fixed to the upper end portion of the first leg 35a, the upper end portion of the second leg 35b, an upper end portion of the support pillar 35g on the left, and an upper end portion of the support pillar 35g on the right. The first rod member 35h supports a rear portion of the protection mechanism 80. The second rod member 35i supports the exterior cover 70.

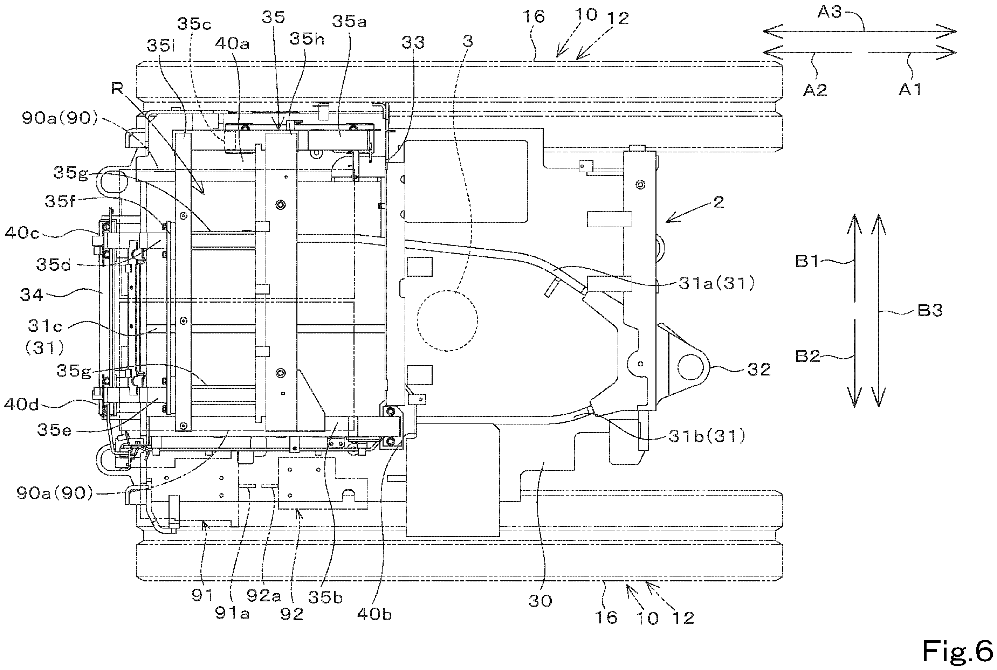

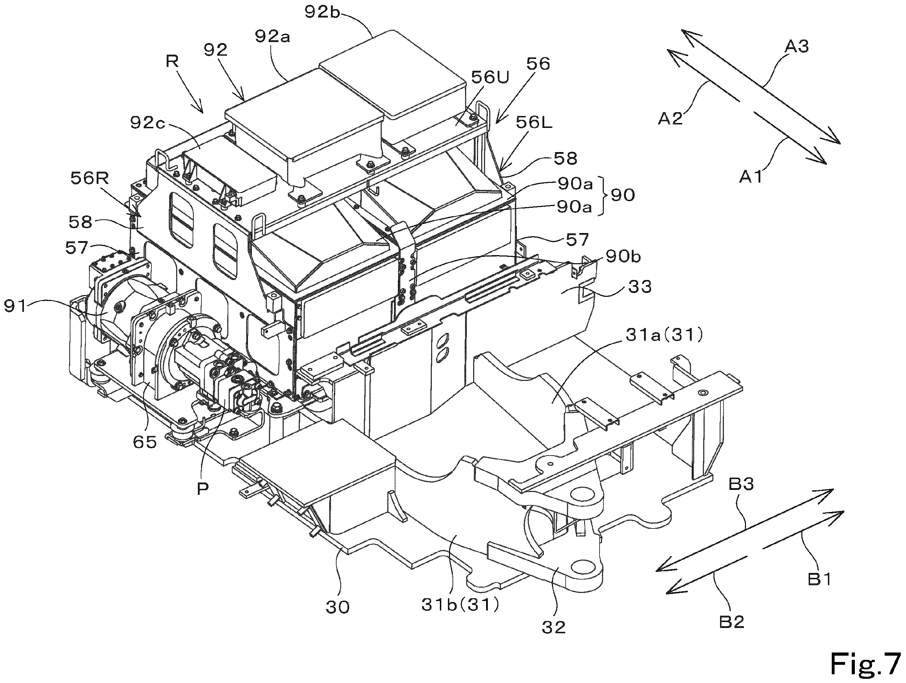

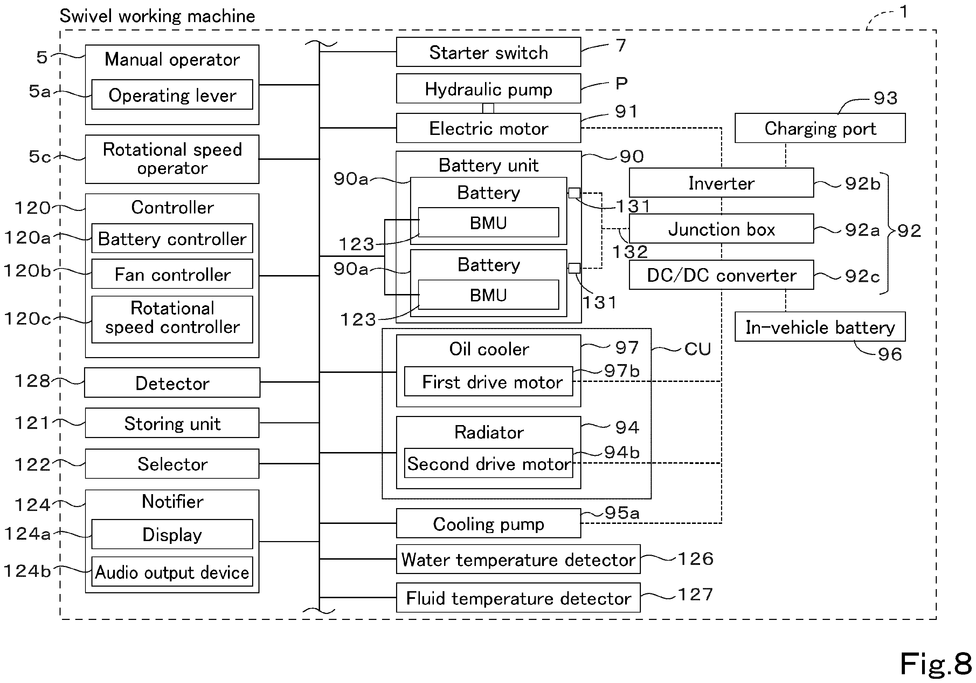

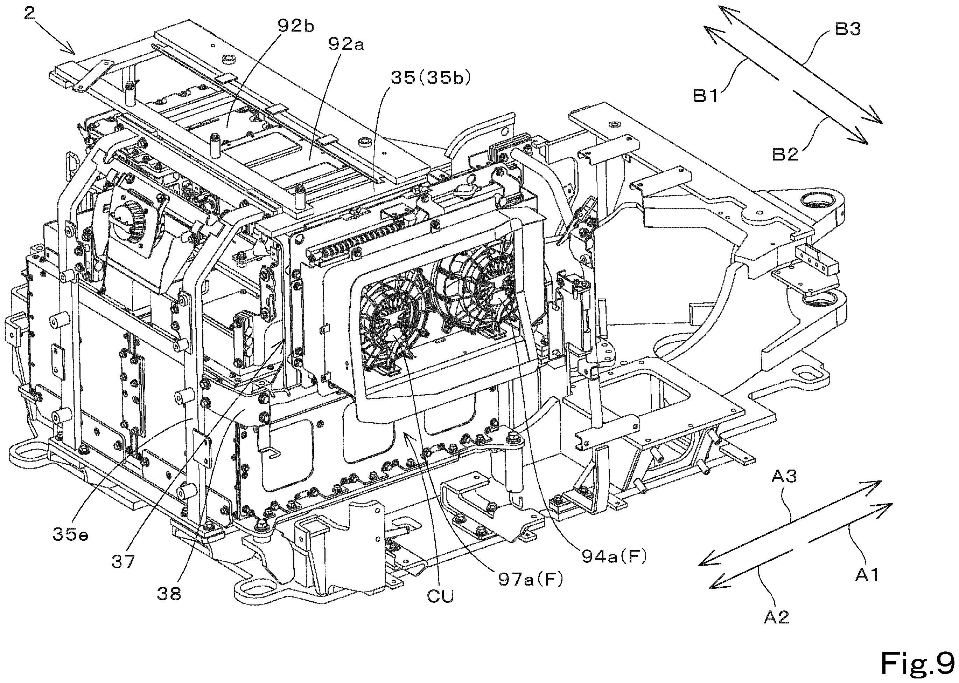

Devices mounted in the rear room R of the swivel base 2 are described below. FIG. 6 is a plan view illustrating the lower traveling body 10, the swivel board 30, various devices provided on the swivel board 30, and the like. FIG. 7 is a front right perspective view illustrating the swivel board 30, the battery unit 90, the electric motor 91, the hydraulic pump P, and electric components 92. FIG. 8 is a block diagram illustrating a system of the swivel working machine 1. FIG. 9 is a rear right perspective view illustrating the swivel board 30, the battery unit 90, the electric components 92, and a cooling unit CU. As illustrated in FIG. 8, the swivel working machine 1 includes the battery unit 90, the electric motor 91, the electric components 92, a charging port 93, and the cooling unit CU. As illustrated in FIGS. 6, 7, and 9, the battery unit 90, the electric motor 91, the electric components 92, the charging port 93, and the cooling unit CU are provided on the swivel base 2.

The battery unit 90 is an electric device that can accumulate electric power and outputs the accumulated electric power. As illustrated in FIG. 6, the battery unit 90 is provided in a central portion, in the width direction, of a rear portion of the swivel base 2. Specifically, the battery unit 90 is provided from an intermediate portion of the swivel base 2 in the front-rear direction A3 to a rear portion of the swivel base 2. That is, a rear portion of the battery unit 90 is located rearward of the rear portion of the lower traveling body 10. As illustrated in FIG. 2, a center of gravity of the battery unit 90 is located on one side (left side) with respect to a central line Y of the swivel base 2 in the width direction B3 and is provided rearward of the protection mechanism 80.

As illustrated in FIG. 6, the battery unit 90 is surrounded by the support frame 35. The lower end portion of the first leg 35a and the lower end portion of the second leg 35b are located forward of the battery unit 90. The third leg 35c is located on the left of the battery unit 90. The lower end portion of the fourth leg 35d and the lower end portion of the fifth leg 35e are located rearward of the battery unit 90. The upper end portion of the first leg 35a, the upper end portion of the second leg 35b, the upper end portion of the fourth leg 35d, the upper end portion of the fifth leg 35e, the pair of support pillars 35g, the first rod member 35h, and the second rod member 35i are located above the battery unit 90.

As illustrated in FIG. 8, the electric motor 91 is a drive source that is driven by electric power output by the battery unit 90. The electric motor 91 is an interior permanent magnet three-phase AC synchronous motor. A rotational speed of the electric motor 91 is, for example, operated by a rotational speed operator 5c. The rotational speed operator 5c can set a range of a motor rotational speed of the electric motor 91 in a case where the motor rotational speed of the electric motor 91 is set in accordance with a current value that changes in response to operation of the manual operator 5. The rotational speed operator 5c is, for example, a dial-type switch such as a selector switch having a plurality of switch positions, and a target value of the rotational speed of the electric motor 91 is allocated to each of the plurality of switch positions. The rotational speed operator 5c can be operated to set a range of the target value of the rotational speed of the electric motor 91, for example, within a range of 1500 rpm/min to 2600 rpm/min. Note that the electric motor 91 may be a synchronous motor of a different kind, and may be an AC motor or may be a DC motor. The rotational speed of the electric motor 91 may be operated based on a preset table in accordance with an operation amount of the manual operator 5.

The electric motor 91 rotates a drive shaft upon supply of electric power from the battery unit 90, and driving force is transmitted from the drive shaft to the hydraulic pump P. The hydraulic pump P is coupled to the drive shaft of the electric motor 91 and is driven by the driving force transmitted from the drive shaft. That is, the hydraulic pump P is driven by driving of the electric motor 91 and thus delivers a hydraulic fluid.

As illustrated in FIG. 2, the electric motor 91 and the hydraulic pump P are provided on the other side (right side) with respect to the central line Y of the swivel base 2 in the width direction B3 and are arranged side by side in the front-rear direction A3 beside the battery unit 90, as illustrated in FIGS. 6 and 7. Specifically, the electric motor 91 and the hydraulic pump P are provided beside (on the right of) the battery unit 90 so as to be located lower than the battery unit 90.

As illustrated in FIG. 7, the electric components 92 are arranged side by side in the width direction B3 above the battery unit 90. As illustrated in FIG. 8, the electric components 92 are devices and the like that are directly or indirectly connected to the battery unit 90 and transmit electric power supplied by the battery unit 90 or operates upon supply of the electric power. The electric components 92 are, for example, a junction box 92a, an inverter 92b, a DC/DC converter 92c. The junction box 92a is connected to the battery unit 90 and other devices including the inverter 92b and transmits electric power supplied from the battery unit 90 to the other devices.

The inverter 92b is provided on an electric power supply path 132 from the battery unit 90 to the electric motor 91 and adjusts electric power to be output to the electric motor 91. In the present embodiment, the inverter 92b is connected to the junction box 92a and the electric motor 91. The inverter 92b is a device that drives the electric motor 91, and converts DC electric power into three-phase AC electric power and supplies the three-phase AC electric power to the electric motor 91. The inverter 92b can freely change a current and a voltage of the electric power supplied to the electric motor 91.

The DC/DC converter 92c converts a voltage of an input DC current into a different voltage. In the present embodiment, the DC/DC converter 92c is a step-down converter that converts an input voltage into a lower voltage. The DC/DC converter 92c is, for example, provided on the swivel working machine 1 and supplies electric power to an in-vehicle battery 96 that supplies electric power to an electronic device.

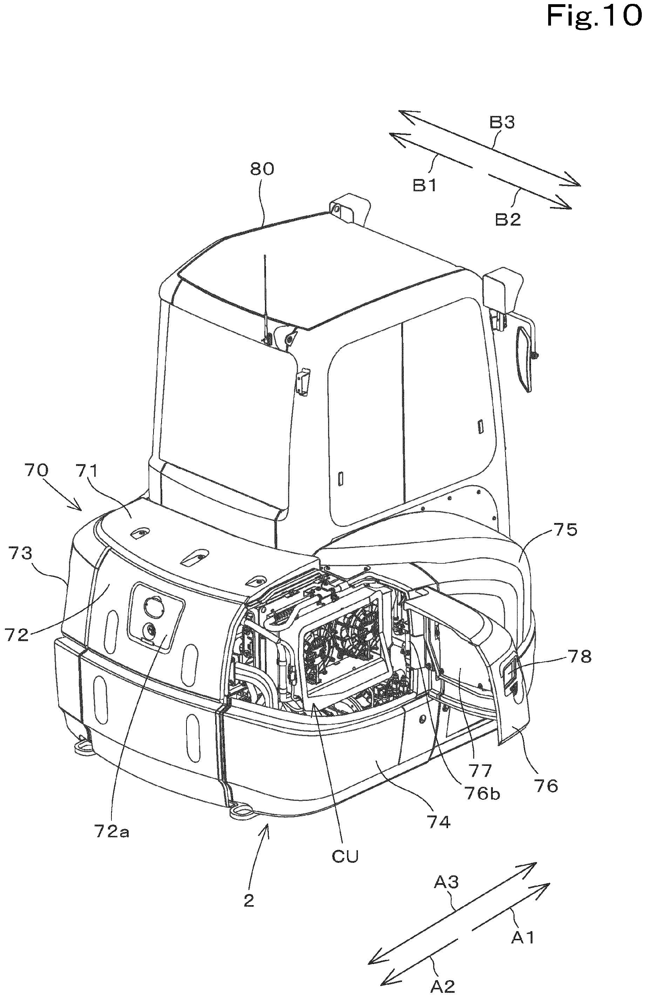

FIG. 10 is a rear right perspective view illustrating the swivel base 2, the protection mechanism 80, and the exterior cover 70. As illustrated in FIG. 10, the exterior cover 70 includes an upper hood 71, a rear hood 72, a left hood 73, a right hood 74, and a front right hood 75. The upper hood 71 is a cover member that forms an upper side of the rear room R and is detachably attached to the second rod member 35i of the support frame 35 so as to be cover the battery unit 90 and the electric components 92. The rear hood 72 is a cover member that forms a rear side of the rear room R and is attached to the support frame 35. The left hood 73 is a cover member that forms a left side of the rear room R and has an air intake port 73a. The air intake port 73a is, for example, a plurality of horizontally-long openings that are arranged in the vertical direction, but is not limited to this configuration. The right hood 74 is a cover member that forms a rear right side of the rear room R. The right hood 74 is provided with an inspection door 76. The inspection door 76 is openable and closable with respect to the right hood 74 and includes an air exit portion 77 for discharging air inside the exterior cover 70. The front right hood 75 is a cover member that is located forward of the right hood 74 and forms a front right side of the rear room R.

The charging port 93 is a socket to which a cable for accumulating electric power in the battery unit 90 is connected, and electric power is externally supplied thereto. As illustrated in FIGS. 3 and 10, the charging port 93 is exposed from the exterior cover 70 when a charging lid (lid member) 72a attached to the rear hood 72 is opened to connect a cable for externally supplying electric power to the charging port 93. The charging lid 72a is swingably coupled to the rear hood 72 with the use of a hinge or the like and is openable and closable about a swing shaft of the hinge.

As illustrated in FIG. 9, the cooling unit CU is attached to a fixing bracket 37 provided on the support frame 35 standing on the swivel base 2.

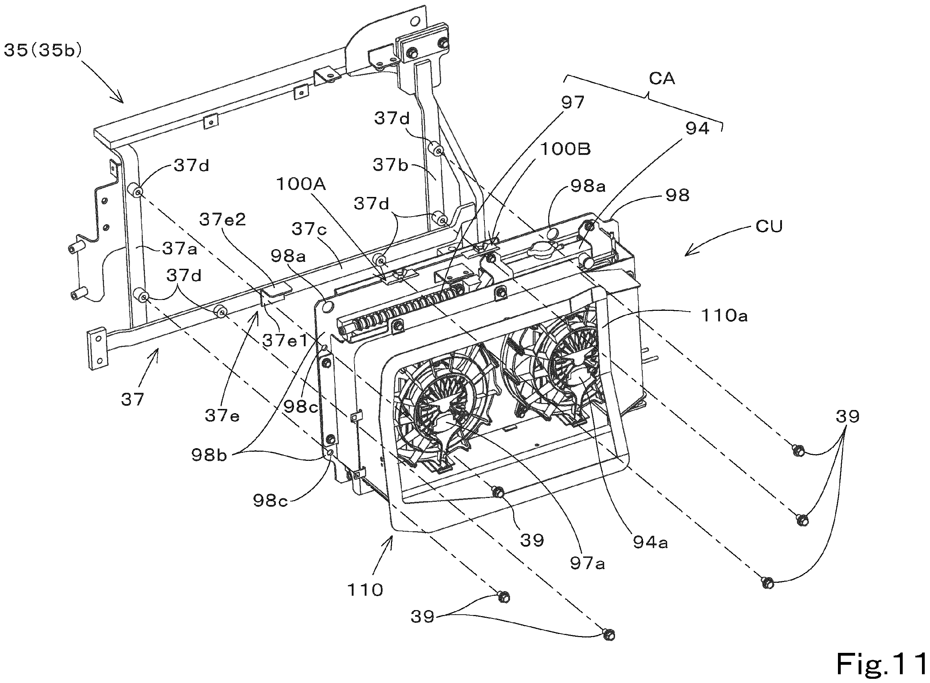

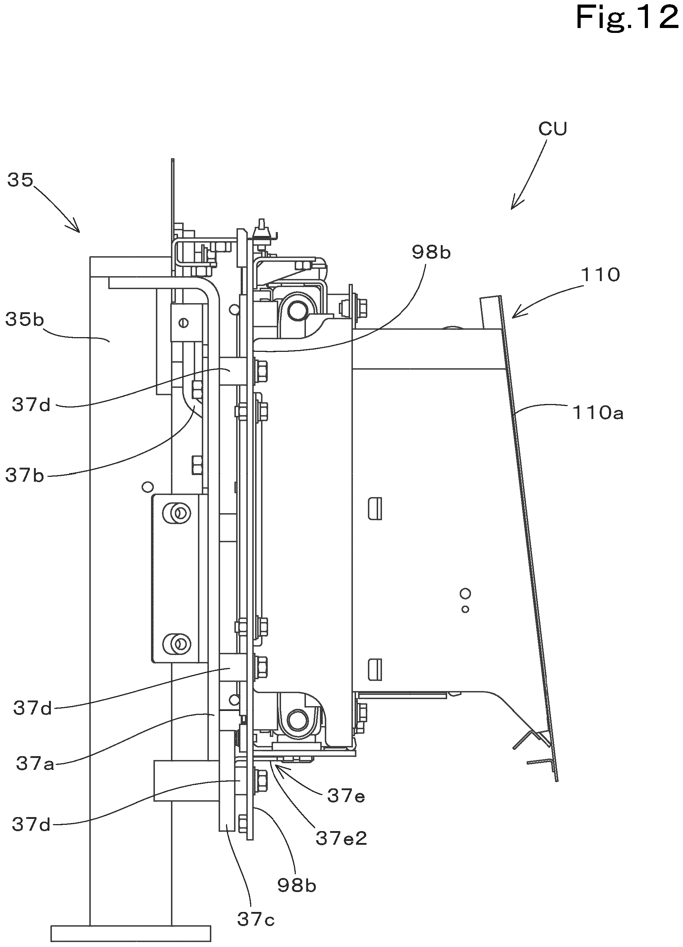

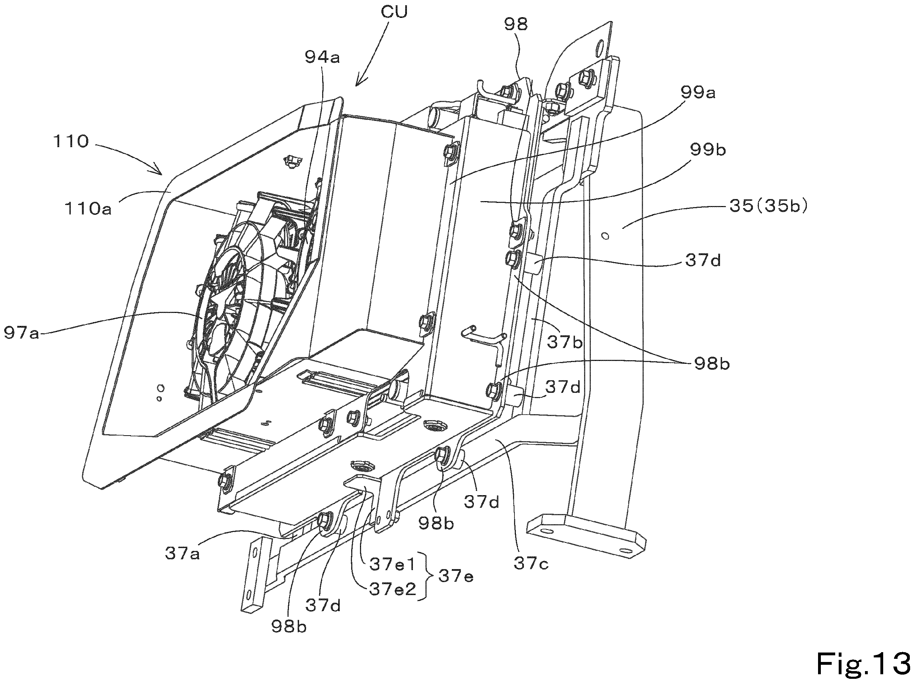

FIG. 11 is an exploded perspective view illustrating attachment of the cooling unit CU to the support frame 35. FIG. 12 is a back view illustrating a state in which the cooling unit CU has been attached to the support frame 35. FIG. 13 is a front right perspective view illustrating a state in which the cooling unit CU has been attached to the support frame 35. The fixing bracket 37 includes a first vertical bar 37a, a second vertical bar 37b, and a horizontal bar 37c, which are steel members. An upper end of the first vertical bar 37a is attached to a lower surface of a rear end of the second leg 35b, and the first vertical bar 37a is bent so as to extend downward. An upper end of the second vertical bar 37b is attached to a flange portion of the second leg 35b, and the second vertical bar 37b extends downward. A rear end portion of the horizontal bar 37c is attached to a coupling bent plate 38 coupled to the fifth leg 35e, and a front end portion of the horizontal bar 37c is attached to the lower end portion of the second leg 35b. To the horizontal bar 37c, a lower end portion of the first vertical bar 37a is attached in the vicinity of a rear end portion of the horizontal bar 37c, and a lower end portion of the second vertical bar 37b is attached in the vicinity of a front end portion of the horizontal bar 37c. Accordingly, the fixing bracket 37 is firmly fixed to the support frame 35 and can support the cooling unit CU.

The fixing bracket 37 is provided with an attachment boss 37d on which a fastener 39 such as a bolt is screwed. The attachment boss 37d is provided at six portions in total, specifically, at upper and lower two portions of a left end of the fixing bracket 37, upper and lower two portions of a right end of the fixing bracket 37, and left and right two portions of a lower end of the fixing bracket 37. Specifically, two attachment bosses 37d are provided on each of the first vertical bar 37a, the second vertical bar 37b, and the horizontal bar 37c.

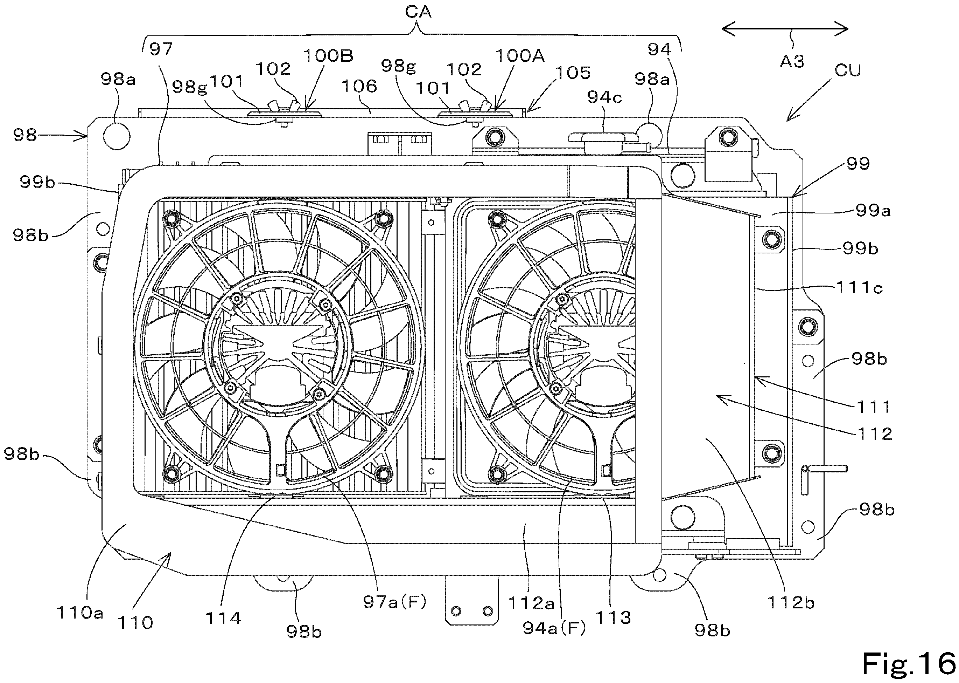

A frame body 98 of the cooling unit CU includes a fixed portion 98b where the cooling unit CU is fixed to the fixing bracket 37 with the fastener 39. The fixed portion 98b is provided at portions corresponding to the attachment bosses 37d of the fixing bracket 37. Specifically, the fixed portion 98b is provided at six portions in total, specifically, upper and lower two portions of a left end (see FIG. 11), upper and lower two portions of a right end, and left and right two portions of a lower end (see FIG. 13). The fixed portion 98b has a through hole 98c through which the fastener 39 such as a bolt is inserted. The fixed portion 98b is provided at positions that do not overlap a heat exchanger CA, a fan unit FU, and a shroud 110 when viewed from an air exit side of the cooling unit CU, as illustrated in FIG. 16, which will be described later.

As illustrated in FIG. 11, the cooling unit CU includes an attachment portion 98a to which a hoisting tool is attached. The attachment portion 98a is, for example, an attachment hole that is large enough for the hoisting tool to be attached thereto. The attachment portion 98a is provided at both ends of an upper portion of the frame body 98 of the cooling unit CU. The hoisting tool can be detached from the attachment portion 98a in a case where hoisting action is not needed.

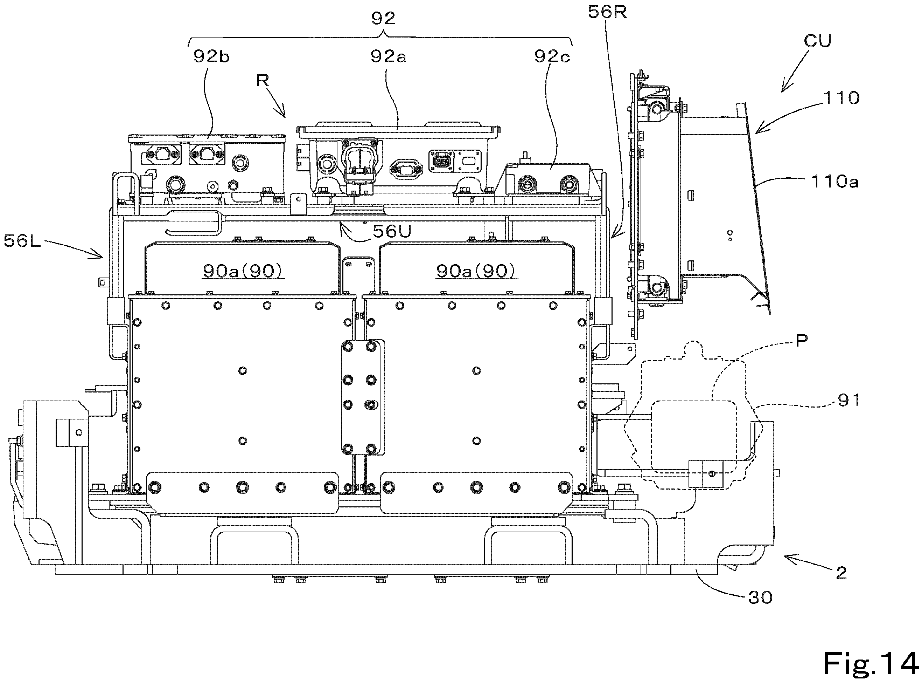

Furthermore, the fixing bracket 37 includes a temporary placement portion 37e on which the cooling unit CU is temporarily placed. The temporary placement portion 37e is, for example, a steel member having an L-shaped cross section, and includes a fixedly attached portion 37e1 that is fixedly attached to the horizontal bar 37c and a contact portion 37e2 with which the cooling unit CU makes contact. As illustrated in FIG. 12, the temporary placement portion 37e is provided so that a height position of the cooling unit CU that has been temporarily placed matches an attachment height at which the cooling unit CU is attached to the fixing bracket 37. In other words, the temporary placement portion 37e is provided to realize such a height position relationship that the attachment bosses 37d of the first vertical bar 37a and the second vertical bar 37b match the respective through holes 98c (described later) of the frame body 98. In work of attaching the cooling unit CU, the cooling unit CU hoisted by a crane is temporarily placed on the temporary placement portion 37e, and the cooling unit CU is fixed to the fixing bracket 37 with the fastener 39. FIG. 14 is a back view illustrating a height position of the cooling unit CU. Note that illustration of the support frame 35 and the fixing bracket 37 is omitted in FIG. 14. As illustrated in FIGS. 3 and 14, the cooling unit CU (the heat exchanger CA and the fan unit FU, which will be described later) is provided at a height position of the inverter 92b so as to be located above the electric motor 91 and the hydraulic pump P.

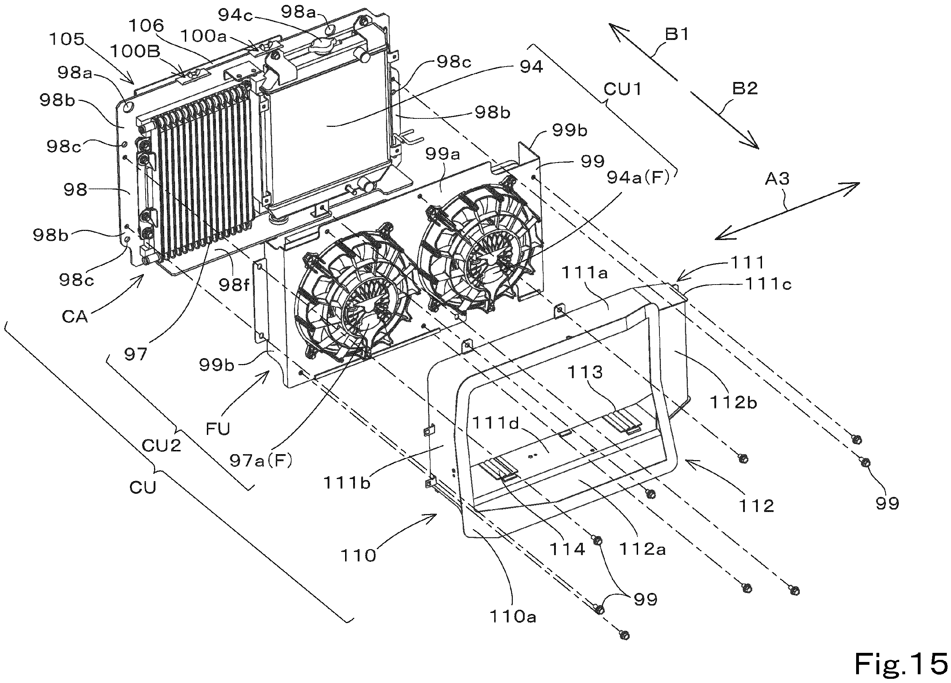

As illustrated in FIG. 10, the cooling unit CU is provided in the space of the exterior cover 70 so as to face the air exit portion 77. FIG. 15 is an exploded perspective view of the cooling unit CU. The cooling unit CU is an assembly in which the frame body 98, the heat exchanger CA, the fan unit FU, and the shroud 110 are combined. The cooling unit CU includes a first cooling unit CU1 and a second cooling unit CU2. The first cooling unit CU1 includes a radiator 94 and a radiator fan 94a, which will be described later. The second cooling unit CU2 includes an oil cooler 97 and an oil cooler fan 97a, which will be described later. The heat exchanger CA is a cooler that cools a device, and is attached to a position of the frame body 98 that faces the air exit portion 77 and corresponds to openings 98d and 98e (to one surface of the frame body 98, that is, a surface facing the exterior cover 70). The fan unit FU is attached adjacent to the heat exchanger CA to one surface of the frame body 98 so that an air intake side thereof faces the heat exchanger CA. The fan unit FU includes fans F (the radiator fan 94a and the oil cooler fan 97a). The fans F are provided on the air exit portion 77 side of the heat exchanger CA so that an air intake side thereof faces the heat exchanger CA and an air exit side thereof faces the air exit portion 77. The shroud 110 is attached to the fan unit FU.

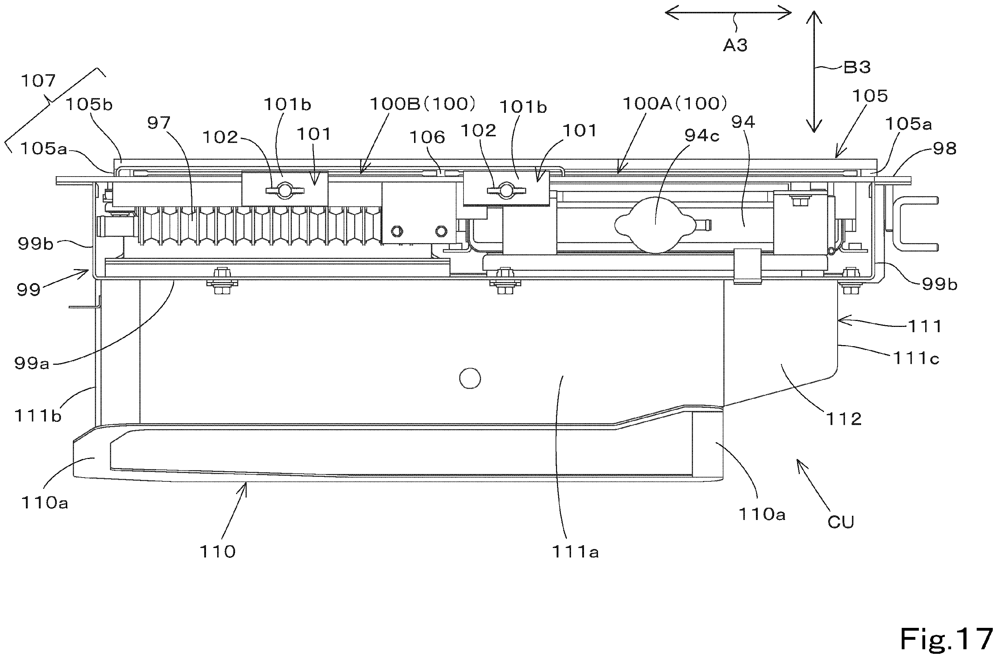

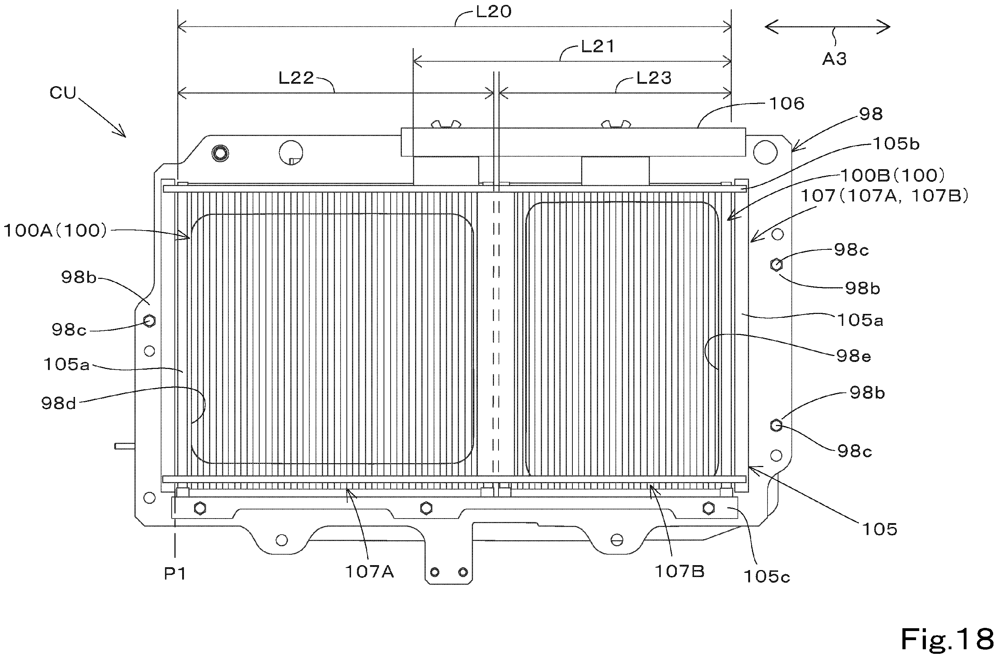

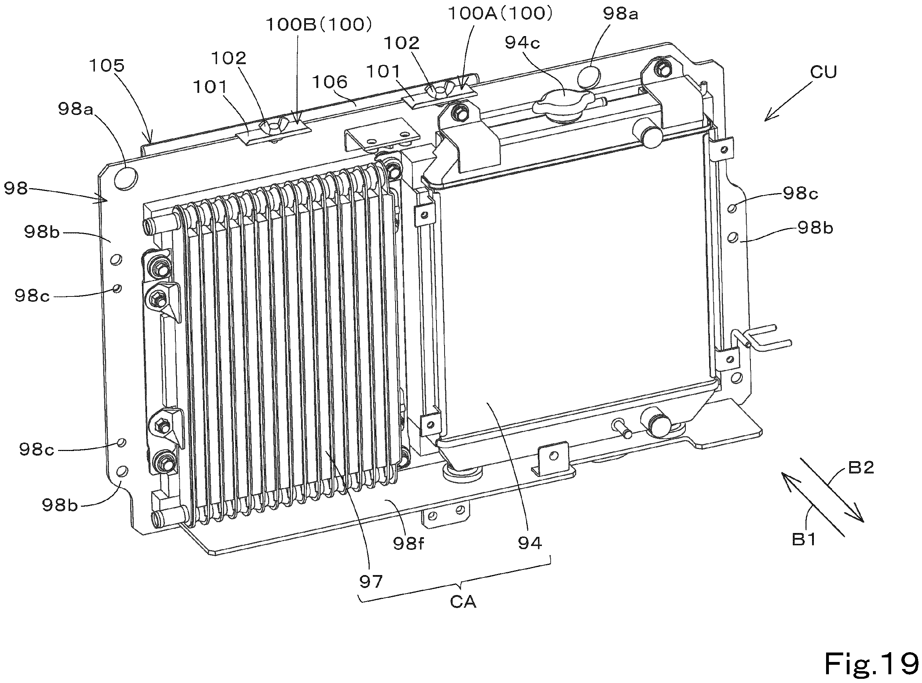

FIG. 16 illustrates the cooling unit CU viewed from an air exit side. FIG. 17 is a plan view of the cooling unit CU. FIG. 18 illustrates the cooling unit CU viewed from an air intake side. FIG. 19 is a perspective view illustrating the oil cooler 97 and the radiator attached to the frame body of the cooling unit CU.

As illustrated in FIGS. 15 and 19, the heat exchanger CA is attached to one surface of the frame body 98. Specifically, the radiator 94 and the oil cooler 97 are attached to one surface of the frame body 98 so as to be arranged side by side in a longitudinal direction of the frame body 98.

The heat exchanger CA includes the radiator 94 that cools a to-be-cooled device and the oil cooler 97 that cools a hydraulic fluid for driving the working device 20. The radiator 94 is a device that cools cooling water (refrigerant) for cooling units such as the electric motor 91 and the electric components 92. The radiator 94 includes, in an upper portion thereof, a water supply portion 94c to which the cooling water is supplied. The radiator 94 is cooled (heat is removed) by the radiator fan 94a, which will be described later. The radiator fan 94a generates cooling air by being driven to rotate and thus removes heat of the radiator 94. The radiator fan 94a sucks in air around the radiator 94 and discharges the air from an inside of the rear room R to an outside of the rear room R through an opening of the exterior cover 70. In this way, the cooling air whose temperature has risen through heat exchange with the radiator 94 is discharged to the outside. Note that although an outer surface of the radiator 94 is flat in FIGS. 15 and 19, this is not restrictive. The outer surface of the radiator 94 may have a shape such as an irregular shape, a wave shape, or a shape with a plurality of fins so that heat radiation performance is increased.

The oil cooler 97 is a device that cools a hydraulic fluid delivered from the hydraulic pump P. The oil cooler 97 is cooled by the oil cooler fan 97a, which will be described later. The oil cooler fan 97a generates cooling air by being driven to rotate, sucks in air around the oil cooler 97, and discharges the sucked air from an inside of the rear room R formed by the exterior cover 70 to the outside.

As illustrated in FIG. 14, the radiator 94 and the oil cooler 97 are provided above the hydraulic pump P and the electric motor 91. The radiator fan 94a and the oil cooler fan 97a thus suck in air around the battery unit 90 including air heated by heat radiated from the battery unit 90 and air that has been heated by heat radiated from the hydraulic pump P and the electric motor 91 and moved upward, and discharges the air to a machine body outside. The water supply portion 94c of the radiator 94 is provided in an uppermost portion of a water cooling path 95, and the water supply portion 94c is provided at a position higher than the radiator 94, the electric motor 91, and the electric components 92 (e.g., the inverter 92b and the DC/DC converter 92c).

As illustrated in FIG. 18, the frame body 98 is a steel plate having a substantially rectangular shape when viewed in a direction indicated by arrow B1. As illustrated in FIG. 19, a lower end of the frame body 98 is bent and extends in a direction indicated by arrow B2 to form a bottom portion 98f. The frame body 98 has the openings 98d and 98e at portions facing the radiator 94 and the oil cooler 97 that constitute the cooling unit CU. That is, the openings 98d and 98e of the frame body 98 are arranged side by side (in the front-rear direction A3). One opening 98d has a size nearly equal to the radiator 94. The other opening 98e has a size nearly equal to the oil cooler 97.

As illustrated in FIG. 15, the fan unit FU is attached to one surface of the frame body 98. The fan unit FU includes the radiator fan 94a that cools the radiator 94, the oil cooler fan 97a that cools the oil cooler 97, and an attachment frame 99 to which the radiator fan 94a and the oil cooler fan 97a are attached side by side. The attachment frame 99 is a substantially gate-shaped frame body including an attachment plate portion 99a and a leg portion 99b that is bent and extends from both ends of the attachment plate portion 99a toward the frame body 98. To the attachment plate portion 99a, the oil cooler fan 97a and the radiator fan 94a are attached side by side in a longitudinal direction of the fan unit FU (the front-rear direction A3). The attachment plate portion 99a has, in a portion where the oil cooler fan 97a is located, a circular opening that faces the oil cooler 97. Furthermore, the attachment plate portion 99a has, in a portion where the radiator fan 94a is located, a circular opening that faces the radiator 94. As described above, the fan unit FU is attached to one surface of the frame body 98 so that the air intake side of the radiator fan 94a faces the radiator 94 and the air intake side of the oil cooler fan 97a faces the oil cooler 97.

As illustrated in FIGS. 15 to 17, the shroud 110 is attached to the attachment frame 99 of the fan unit FU so as to surround both of the radiator fan 94a and the oil cooler fan 97a. The shroud 110 guides cooling air generated by the radiator fan 94a and cooling air generated by the oil cooler fan 97a.

The shroud 110 includes a fixing portion 111 having a square tube shape that surrounds both of the radiator fan 94a and the oil cooler fan 97a and a guide portion 112 that extends from the fixing portion 111 outward toward the air exit side and guides cooling air generated by driving of the radiator fan 94a and cooling air generated by driving of the oil cooler fan 97a.

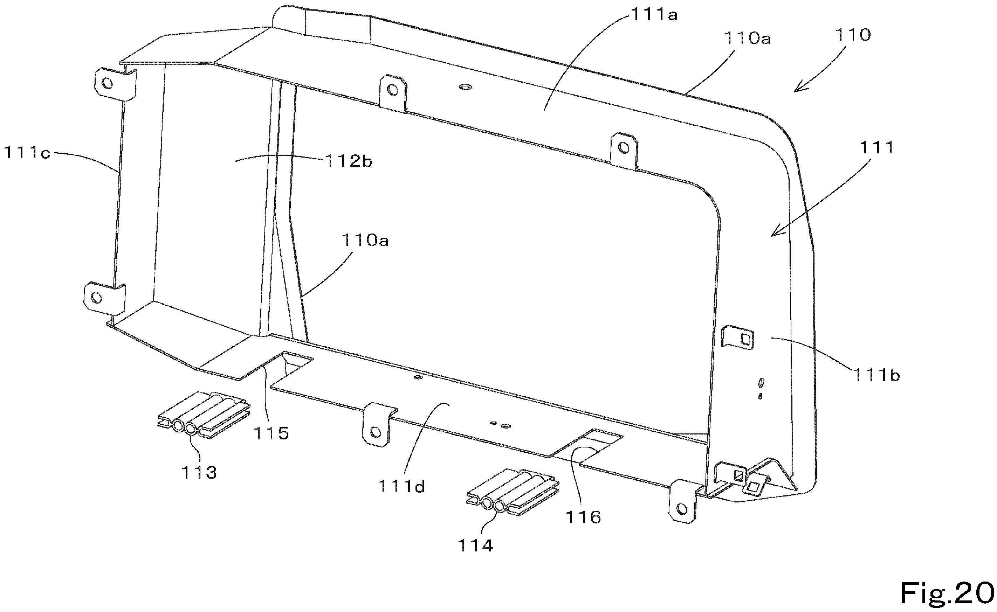

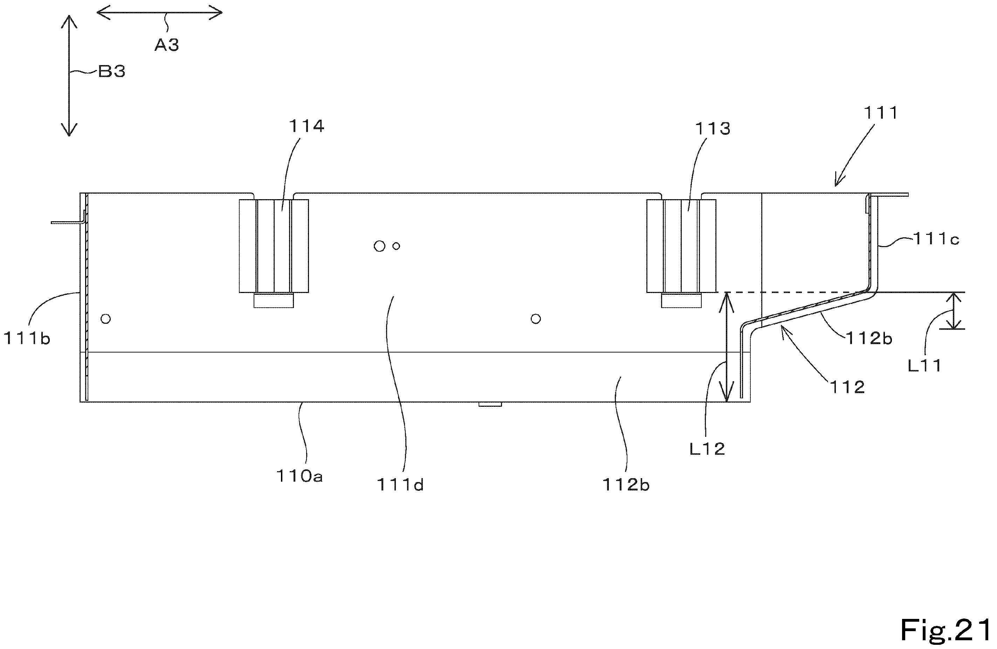

FIG. 20 is a perspective view illustrating the shroud. FIG. 21 is a horizontal cross-sectional view of the shroud. As illustrated in FIGS. 15 and 20 and other drawings, the fixing portion 111 is a rectangular-tubular frame having an upper edge portion 111a, a left edge portion 111b, a lower edge portion 111d, and a right edge portion 111c. Both of the radiator fan 94a and the oil cooler fan 97a are surrounded by this rectangular-tubular frame (the fixing portion 111).

As illustrated in FIGS. 15, 16, 21, and others, the lower edge portion 111d includes a first elastic support body 113 that supports a case lower portion corresponding to the radiator fan 94a and a second elastic support body 114 that supports a case lower portion corresponding to the oil cooler fan 97a. Specifically, as illustrated in FIG. 20, the lower edge portion 111d includes a first cutout portion 115 in a portion corresponding to the case lower portion corresponding to the radiator fan 94a and a second cutout portion 116 in a portion corresponding to the case lower portion corresponding to the oil cooler fan 97a. The first elastic support body 113 is provided in the first cutout portion 115, and the second elastic support body 114 is provided in the second cutout portion 116.

The guide portion 112 includes a downwardly-sloping extension portion 112a that extends outward in an obliquely downward direction from an end portion of the lower edge portion 111d of the fixing portion 111 and a right-side bent extension portion 112b that is bent from an edge portion of the right edge portion 111c of the fixing portion 111 and extending in a radially inward direction of an opening of the fixing portion 111. As illustrated in FIG. 21, a protruding dimension L11 by which the right-side bent extension portion 112b protrudes from the fixing portion 111 is shorter than a protruding dimension L11 by which the downwardly-sloping extension portion 112a protrudes from the fixing portion 111.

As illustrated in FIGS. 17 and 18, a filter 100 and a mount portion 105 where the filter 100 is mounted are provided on the other surface opposite to the one surface of the frame body 98 (i.e., on a surface opposite to a surface facing the exterior cover 70). The filter 100 includes a first filter 100A for the radiator 94 and a second filter 100B for the oil cooler 97. The filter 100 is an air filter that catches dust in air sucked toward the opening by the fan F.

The mount portion 105 is provided on a side of the frame body 98 opposite to a side where the heat exchanger CA is provided. The first filter 100A and the second filter 100B are arranged side by side in the longitudinal direction of the frame body 98 (the front-rear direction A3). Specifically, as illustrated in FIG. 18, the mount portion 105 includes a holding portion 107 including two vertical bar portions 105a, a regulating horizontal bar 105b, and a support bar portion 105c. That is, the mount portion 105 includes a first holding portion 107A and a second holding portion 107B. One vertical bar portion 105a is fixed vertically to a left end portion of the other surface of the frame body 98. The other vertical bar portion 105a is fixed vertically to a right end portion of the other surface of the frame body 98. The support bar portion 105c is fixed horizontally (in the front-rear direction A3) to a lower end of the other surface of the frame body 98 and supports the filter 100 mounted on the mount portion 105. The regulating horizontal bar 105b is provided so that one end thereof is fixed to an upper end outer side surface of the one vertical bar portion 105a and the other end thereof is fixed to an upper end outer side surface of the other vertical bar portion 105a, and keeps the filter 100 mounted on the mount portion 105 from falling. A protruding length by which the two vertical bar portions 105a protrude from the other surface of the frame body 98 is slightly larger than a thickness of the filter 100. A protruding length by which the support bar portion 105c protrudes from the other surface is slightly larger than the thickness of the filter 100. With the configuration, the first filter 100A and the second filter 100B can be held side by side in a space surrounded by the two vertical bar portions 105a, the regulating horizontal bar 105b, and the support bar portion 105c on the other surface of the frame body 98. The first holding portion 107A holds, at a first position P1 away from an attachment/detachment opening 106, one of the first filter 100A and the second filter 100B that has been inserted into the attachment/detachment opening 106 slidably in the direction in which the first filter 100A and the second filter 100B are arranged (the front-rear direction A3). The second holding portion 107B holds the other one of the first filter 100A and the second filter 100B that has been inserted into the attachment/detachment opening 106 with the first filter 100A and the second filter 100B held by the first holding portion 107A.

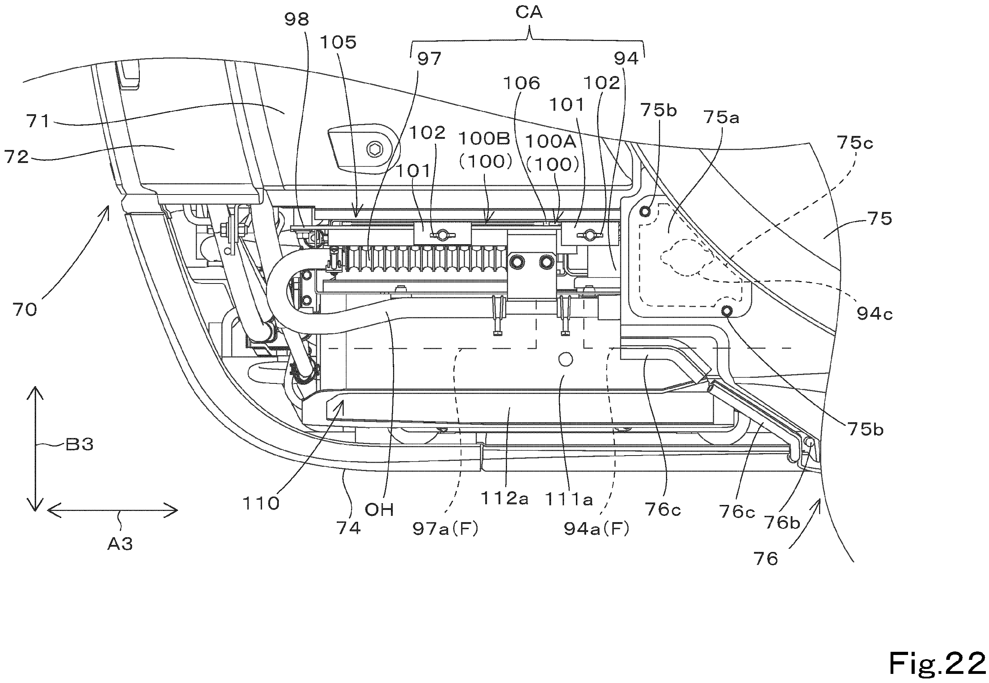

The mount portion 105 has, for example, in an upper portion thereof, the attachment/detachment opening 106 into and from which the filter 100 is inserted and removed. As illustrated in FIG. 17, the attachment/detachment opening 106 has a rectangular shape opened upward. FIG. 22 is an enlarged plan view of a portion of the right hood 74 in a state where the inspection door 76 illustrated in FIG. 10 is opened. The mount portion 105 is configured so that the filter 100 is attachable and detachable in a state where the inspection door 76 is opened. That is, in a state where the inspection door 76 is opened, the attachment/detachment opening 106 of the mount portion 105 is exposed, and the filter 100 is attached to and detached from the mount portion 105 through the attachment/detachment opening 106.

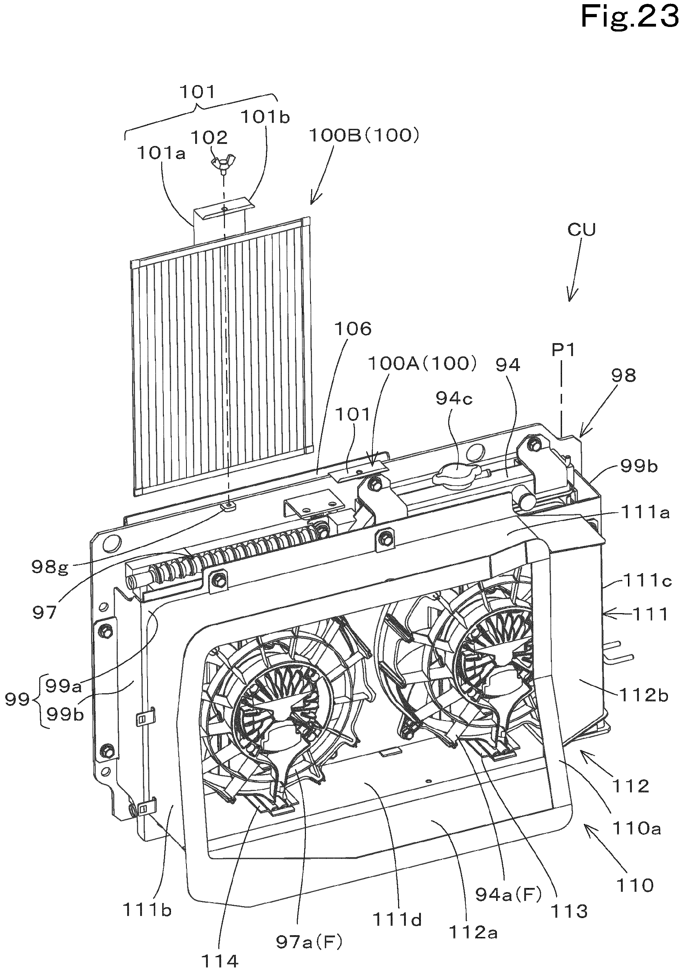

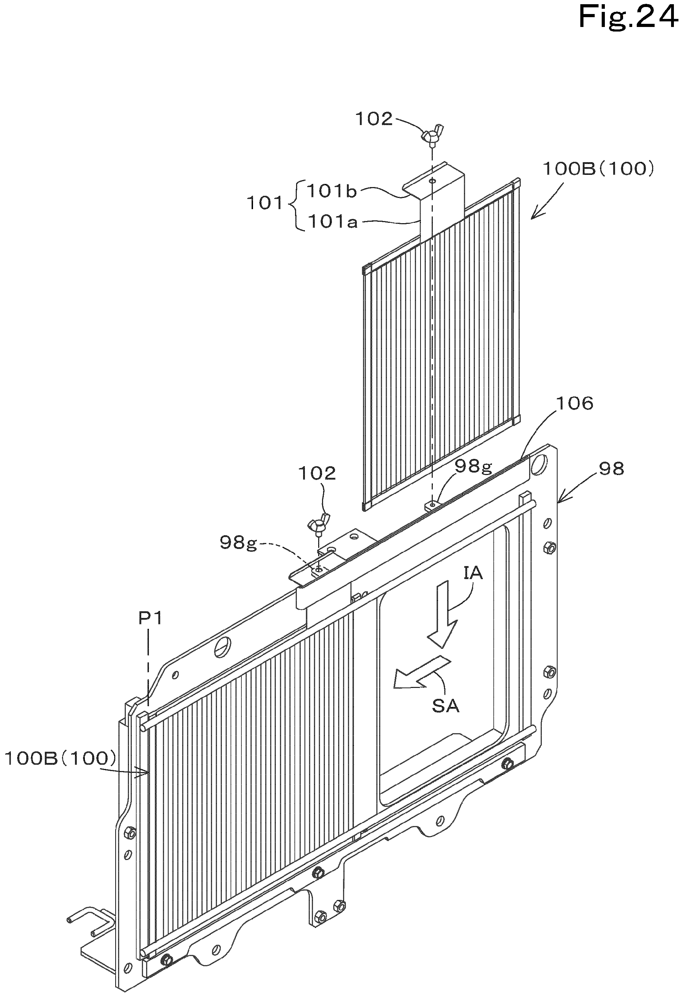

As illustrated in FIGS. 16, 17, and 19, the first filter 100A and the second filter 100B each include a grip portion 101 gripped during attachment to and detachment from the mount portion 105. FIG. 23 is a perspective view of the cooling unit CU for explaining attachment and detachment of the second filter. FIG. 24 is a view for explaining an order of attachment and detachment of the first filter and the second filter. As illustrated in FIGS. 23 and 24, the grip portion 101 of the first filter 100A and the grip portion 101 of the second filter 100B each have a flange portion 101b formed by bending an end of an extension portion 101a extending above the attachment/detachment opening 106 in a state where the first filter 100A and the second filter 100B are mounted on the mount portion 105.

The flange portion 101b is provided with a fixing tool 102 for fixation to the mount portion 105. The fixing tool 102 is, for example, a thumbscrew. The frame body 98 has, at an upper end thereof, a female screw portion 98g at positions corresponding to the flange portions 101b. By screwing the fixing tool 102 of the first filter 100A into the female screw portion 98g of the frame body 98 in a state where the first filter 100A is mounted on the mount portion 105, the first filter 100A is fixed to the mount portion 105. Furthermore, by screwing the fixing tool 102 of the second filter 100B into the female screw portion 98g of the frame body 98 in a state where the second filter 100B is mounted on the mount portion 105, the second filter 100B is fixed to the mount portion 105.

The following describes a dimensional relationship among the first filter 100A, the second filter 100B, and the attachment/detachment opening 106 and the holding portion 107 of the mount portion 105, an attachment/detachment order, and the like. A dimension L21 of the attachment/detachment opening 106 in a longitudinal direction is smaller than an arrangement dimension L20 in which the first filter 100A and the second filter 100B are arranged (that is, a length between the two vertical bar portions 105a) and is larger than a dimension L22 of the first filter 100A and a dimension L23 of the second filter 100B. That is, the first filter 100A and the second filter 100B cannot be simultaneously inserted into the attachment/detachment opening 106, and the first filter 100A and the second filter 100B need be individually inserted into the attachment/detachment opening 106. Furthermore, in a case where the first filter 100A and the second filter 100B are mounted on the mount portion 105, the first filter 100A need be inserted first, and the second filter 100B need be inserted next, and the first filter 100A and the second filter 100B cannot be inserted in a reverse order. In a case where the first filter 100A and the second filter 100B are removed from the mount portion 105, the second filter 100B need be removed first and the first filter 100A need be removed next, and the first filter 100A and the second filter 100B cannot be removed in a reverse order.
(i) In a case where the first filter 100A and the second filter 100B are mounted, a worker inserts the first filter 100A through the attachment/detachment opening 106 (that is, inserts the first filter 100A in an insertion direction IA), slides the inserted first filter 100A to the first position P1 in parallel with the frame body 98 (that is, slides the inserted first filter 100A in a slide direction SA), and screws the fixing tool 102 of the first filter 100A into the female screw portion 98g of the frame body 98. Next, the worker inserts the second filter 100B through the attachment/detachment opening 106 (that is, inserts the second filter 100B in the insertion direction IA) and screws the fixing tool 102 of the second filter 100B into the female screw portion 98g of the frame body 98. In this way, the first filter 100A and the second filter 100B are mounted side by side on the mount portion 105.
(ii) In a case where the first filter 100A and the second filter 100B are removed, the worker unscrews the fixing tool 102 of the second filter 100B from the female screw portion 98g of the frame body 98 and removes the second filter 100B through the attachment/detachment opening 106 (that is, removes the second filter 100B in a direction opposite to the insertion direction IA). Next, the worker unscrews the fixing tool 102 of the first filter 100A from the female screw portion 98g of the frame body 98, slides the first filter 100A at the first position P1 in parallel with the frame body 98 (that is, slides the first filter 100A in a direction opposite to the slide direction SA) so that the first filter 100A is positioned at the attachment/detachment opening 106, and removes the first filter 100A through the attachment/detachment opening 106 (that is, removes the first filter 100A in a direction opposite to the insertion direction IA). In this way, the first filter 100A and the second filter 100B are removed from the mount portion 105.

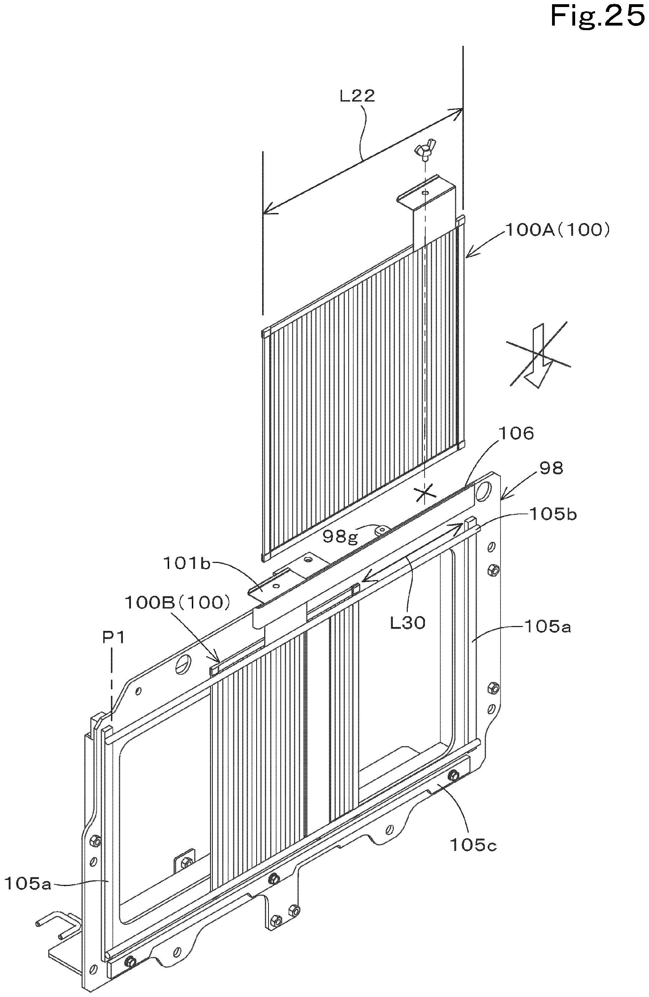

A configuration for preventing the filter 100 from being erroneously mounted is described with reference to FIG. 25. FIG. 25 illustrates a case where the first filter 100A cannot be mounted since the second filter 100B is mounted first. In a case where the second filter 100B is inserted through the attachment/detachment opening 106 earlier than the first filter 100A, the flange portion 101b of the second filter 100B interferes with the attachment/detachment opening 106 even in a case where the second filter 100B is slid toward the first position P1 in parallel with the frame body 98. Accordingly, an available dimension L30, which is a dimension where the second filter 100B is not positioned in the longitudinal direction of the attachment/detachment opening 106, is smaller than the dimension L22 of the first filter 100A. In this state, the first filter 100A cannot be inserted into the attachment/detachment opening 106. In this state, the first filter 100A cannot be inserted into the attachment/detachment opening 106. This can prevent the first filter 100A and the second filter 100B from being erroneously mounted.

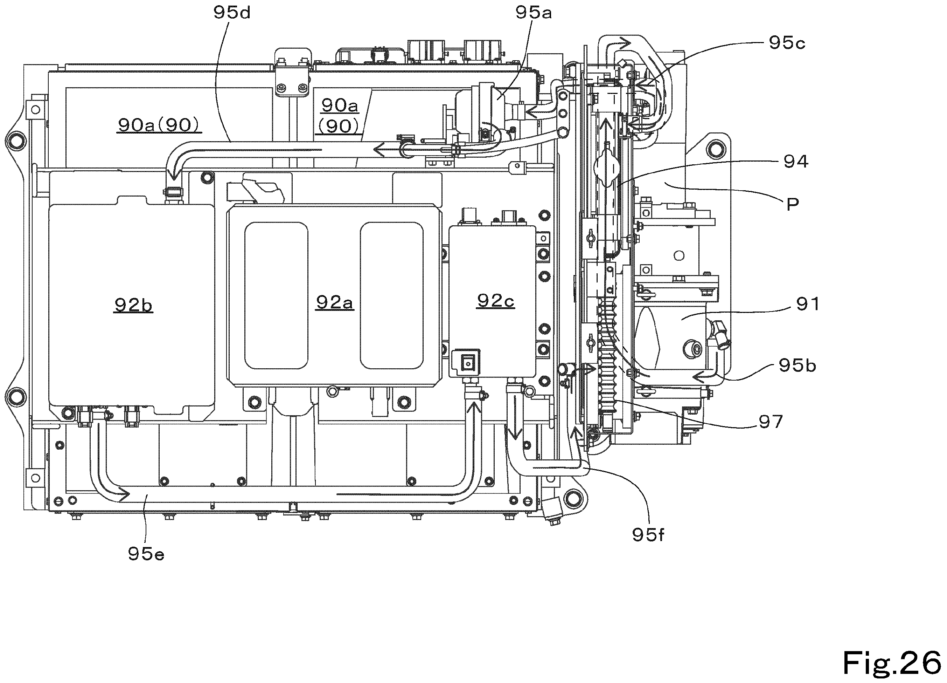

The water cooling path 95 for the radiator 94 is described below. FIG. 26 illustrates the water cooling path 95 for the radiator 94. As illustrated in FIG. 26, the swivel working machine 1 includes the water cooling path 95 that connects members such as the radiator 94, the electric motor 91, and the electric components 92 (e.g., the inverter 92b and the DC/DC converter 92c) and through which a refrigerant cooled by the radiator 94 and a refrigerant that has exchanged heat with the electric motor 91 and the electric components 92 flow. On the water cooling path 95, a cooling pump 95a that delivers cooling water and circulates the cooling water as a refrigerant is provided. In the present embodiment, the water cooling path 95 causes the cooling water to circulate from the radiator 94 back to the radiator 94 by passing the cooling pump 95a, the inverter 92b, the DC/DC converter 92c, and the electric motor 91. Specifically, the water cooling path 95 includes a feeding water path 95b, a return water path 95c, a first water path 95d, a second water path 95e, and a third water path 95f.

As illustrated in FIG. 12, the feeding water path 95b is a water path for feeding a refrigerant from members such as the electric motor 91 to the radiator 94. Specifically, the feeding water path 95b connects the electric motor 91 and the radiator 94 and causes a refrigerant to flow from the electric motor 91 to the radiator 94. The return water path 95c is a water path that returns a refrigerant from the radiator 94 to the cooling pump 95a. Specifically, the return water path 95c connects the radiator 94 and the cooling pump 95a and causes a refrigerant to flow from the radiator 94 to the cooling pump 95a.

The first water path 95d connects the cooling pump 95a and the inverter 92b and causes a refrigerant to flow from the cooling pump 95a to the inverter 92b. The second water path 95e connects the inverter 92b and the DC/DC converter 92c and causes a refrigerant to flow from the inverter 92b to the DC/DC converter 92c. The third water path 95f connects the DC/DC converter 92c and the electric motor 91 and causes a refrigerant to flow from the DC/DC converter 92c to the electric motor 91. That is, cooling water cooled by the radiator 94 flows from the radiator 94 and returns to the radiator 94 after passing the return water path 95c, the cooling pump 95a, the first water path 95d, the inverter 92b, the second water path 95e, the DC/DC converter 92c, the third water path 95f, the electric motor 91, and the feeding water path 95b.

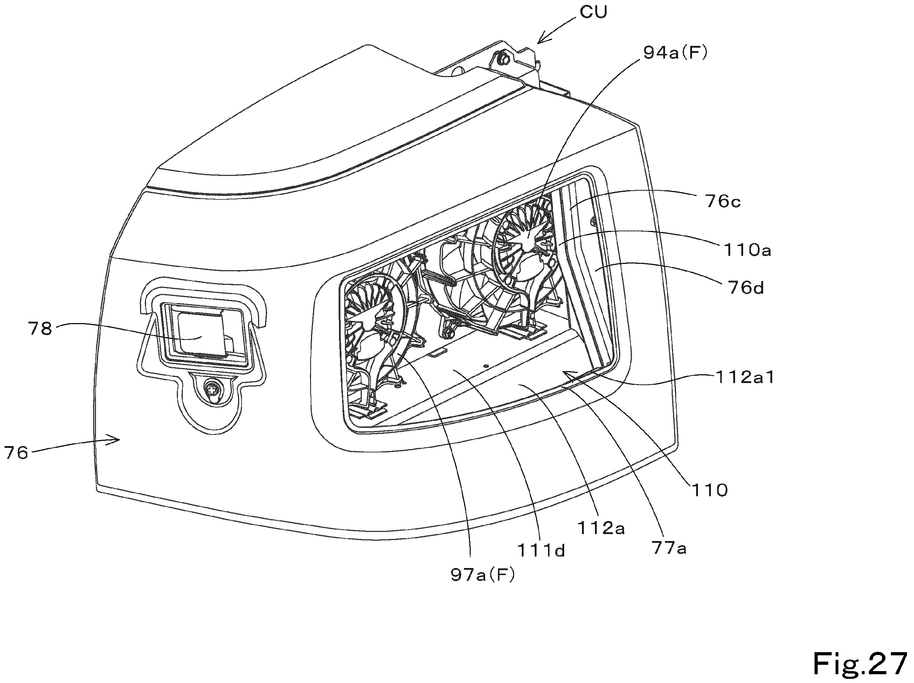

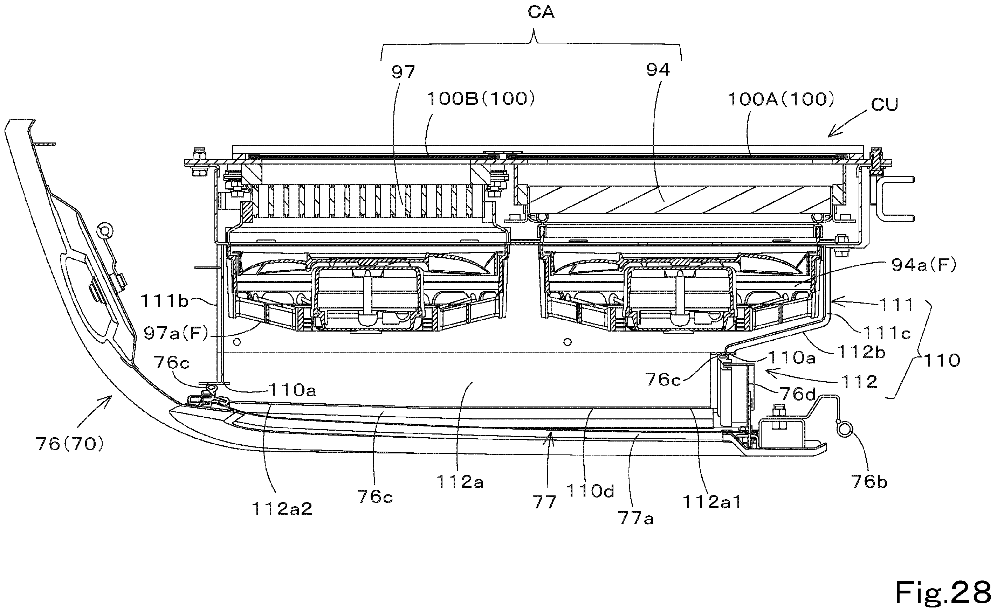

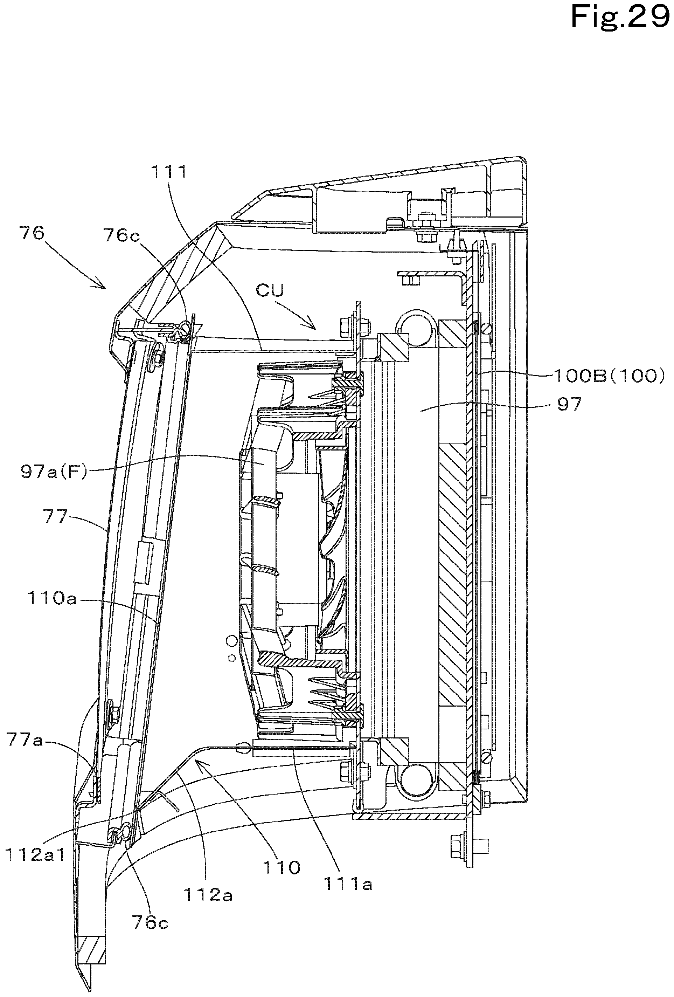

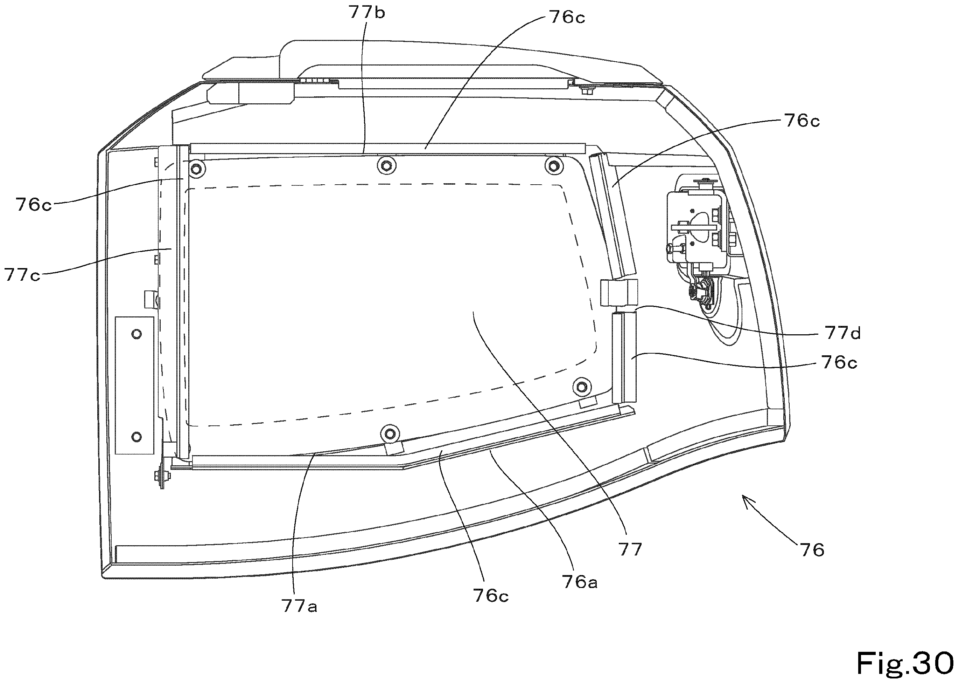

The following describes a duct structure of the cooling unit CU formed by the shroud 110 and the inspection door 76. FIG. 27 illustrates a duct configuration formed by the shroud 110 of the cooling unit CU and the inspection door 76. Note that the inspection door 76 from which the air exit portion 77 has been removed is illustrated in FIG. 27 to describe the duct configuration. FIG. 28 is a horizontal cross-sectional view of a right hood illustrating a duct configuration formed by the shroud 110 of the cooling unit CU and the inspection door 76. FIG. 29 is a vertical cross-sectional view of the right hood illustrating a duct configuration formed by the shroud 110 of the cooling unit CU and the inspection door 76. FIG. 30 illustrates an inner surface side of the inspection door 76.

When the inspection door 76 is closed, an opening edge portion 110a of the shroud 110 makes contact with a position of the inspection door 76 that surrounds the air exit portion 77, and thus a duct that guides cooling air generated by the fan to the air exit portion 77 is formed. That is, the duct is formed by the shroud 110 and the inspection door 76.

The air exit portion 77 is, for example, a mesh-like member, and air from the cooling unit CU passes through the air exit portion 77 and is discharged to an outside. Note that the air exit portion 77 is not limited to the mesh-like member and may be, for example, a plurality of openings arranged in a predetermined direction. As illustrated in FIG. 29, the air exit portion 77 expands downward below the opening of the fixing portion 111 of the shroud 110.

As illustrated in FIG. 30, the downwardly-sloping extension portion 112a of the shroud 110 makes contact with a lower edge portion 77a of the air exit portion 77 and an outer portion 76a which is an area radially outward of the lower edge portion 77a. That is, the downwardly-sloping extension portion 112a includes a portion 112a1 that makes contact with the lower edge portion 77a of the air exit portion 77 and a portion 112a2 that makes contact with the outer portion 76a of the lower edge portion 77a of the air exit portion 77. Note that the downwardly-sloping extension portion 112a of the shroud 110 may make contact with the lower edge portion 77a of the air exit portion 77. That is, the downwardly-sloping extension portion 112a may make contact along the lower edge portion 77a of the air exit portion 77. The downwardly-sloping extension portion 112a of the shroud 110 may make contact with the outer portion 76a of the lower edge portion 77a of the air exit portion 77. That is, the downwardly-sloping extension portion 112a may make contact along the outer portion 76a of the lower edge portion 77a of the air exit portion 77.

As illustrated in FIGS. 10 and 27, the inspection door 76 includes an opening/closing handle 78. By opening the opening/closing handle 78, the inspection door 76 can be opened. As illustrated in FIGS. 10, 22, and 28, the inspection door 76 includes an opening/closing shaft 76b that allows the inspection door 76 to be opened and closed with respect to the right hood 74 of the exterior cover 70. For example, the opening/closing shaft 76b is provided at a vertical boundary portion between the inspection door 76 and the front right hood 75. Specifically, as illustrated in FIG. 28, the opening/closing shaft 76b is provided in a portion of the exterior cover 70 that corresponds to the right edge portion 111c of the fixing portion 111 (i.e., a right end of the shroud 110).

As illustrated in FIG. 30, the inspection door 76 includes, on an inner side thereof, an elastic body 76c provided so as to surround the air exit portion 77. The elastic body 76c is, for example, seal rubber, sponge rubber, or the like and is provided around the air exit portion 77. Specifically, the elastic body 76c is attached, on the inner side of the inspection door 76, to the lower edge portion 77a of the air exit portion 77, an upper edge portion 77b, a rib 76d standing on a first side 77c facing the right-side bent extension portion 112b, and a second side 77d facing the left edge portion 111b of the fixing portion 111. The rib 76d makes contact with the right-side bent extension portion 112b with the elastic body 76c interposed therebetween.

As illustrated in FIGS. 28 and 29, the elastic body 76c is elastically deformed by making contact with the opening edge portion 110a of the shroud 110 in a state where the inspection door 76 is closed, and thus seals a contact portion between the inspection door 76 and the opening edge portion 110a of the shroud 110.

The exterior cover 70 includes a detachable lid portion 75a in a portion corresponding to the water supply portion 94c separately from the inspection door 76. The lid portion 75a is a lid member having a substantially square shape. Specifically, the front right hood 75 has an opening 75c having a substantially square shape slightly smaller than the lid portion 75a. The lid portion 75a is fixed to the front right hood 75 with a fastener 75b such as a bolt in a state where the lid portion 75a is attached to the opening 75c of the front right hood 75.

Work of attaching the cooling unit CU is described below. The following discusses, as an example, a case where the cooling unit CU is attached to the fixing bracket 37 of the support frame 35 of the swivel base 2 on a production line (main line) for the swivel working machine 1.

First, a hoisting tool is attached to the two attachment portions 98a (attachment holes) of the cooling unit CU. Each hoisting tool is hung on a hook at a tip of a sling (a wire rope, a fiber belt, a chain, or the like) suspended on a crane provided on the production line. Then, the cooling unit CU is hoisted up (for example, hoisted up at two positions) by the crane, and the cooling unit CU is temporarily placed on the temporary placement portion 37e of the fixing bracket 37 of the support frame 35 in a state where positions of the fixing bracket 37 of the support frame 35 and the cooling unit CU in the front-rear direction A3 have been adjusted (i.e., in a state where the attachment bosses 37d at both ends of the fixing bracket 37 match the through holes 98c at both ends of the frame body 98 of the cooling unit CU. When the cooling unit CU is temporarily placed on the temporary placement portion 37e, a height position of the cooling unit CU matches an attachment position where the cooling unit CU is attached to the fixing bracket 37. Then, the fastener 39 such as a bolt is inserted into each of the through holes 98c of the cooling unit CU (i.e., the through holes 98c provided in the fixed portion 98b of the frame body 98) and is then screwed on each of the attachment bosses 37d of the fixing bracket 37. The fastener 39 inserted into the through hole 98c of the cooling unit CU is screwed on each of the six attachment bosses 37d of the fixing bracket 37. In this way, the cooling unit CU is fixed to the fixing bracket 37 of the support frame 35.

Note that the cooling unit CU may be an assembly to which at least one of a hose for cooling water (e.g., the feeding water path 95b, the return water path 95c, and the like) connected to the radiator 94 and a hose OH (see FIG. 22) connected to the oil cooler 97 has been attached.

As illustrated in FIG. 8, the swivel working machine 1 includes a controller 120 and a storing unit (storage and/or memory) 121. The controller 120 includes a device including electric/electronic circuit(s), program(s) stored in CPU and/or the like, and/or the like. The controller 120 controls various devices of the swivel working machine 1. For example, the controller 120 is provided around the seat 8 and controls a rotational speed of the electric motor 91 based on operation of the rotational speed operator 5c, which is operable. Furthermore, the controller 120 is provided around the seat 8 and controls start-up of the swivel working machine 1 based on operation of a starter switch 7 that can be operated to start the swivel working machine 1.

The storing unit 121 is a nonvolatile memory and stores therein various kinds of information concerning control of the controller 120, and the like. For example, the storing unit 121 stores therein information such as a table concerning the rotational speed of the electric motor 91 with respect to an operation amount of the rotational speed operator 5c.

As illustrated in FIGS. 7 and 8 and other drawings, the battery unit 90 includes a plurality of batteries 90a. The plurality of batteries 90a are connected in parallel. The batteries 90a can accumulate electric power therein, and are, for example, secondary batteries such as lithium-ion batteries or lead batteries. Each of the batteries 90a includes a plurality of cells, and the plurality of cells are electrically connected in series and/or in parallel. In the present embodiment, the battery unit 90 includes two batteries 90a. Note that the number of batteries 90a included in the battery unit 90 can be any number more than one and is not limited to two, and may be three or more.

As illustrated in FIG. 8, the swivel working machine 1 includes a connection switcher 131. The connection switcher 131 switches, for each battery 90a, the electric power supply path 132 from the battery 90a to the electric motor 91 between a connected state and a shut-off state. The connection switcher 131 switches the electric power supply path 132 between the connected state and the shut-off state, for example, by performing relay opening/closing operation of at least a portion of the electric power supply path 132. In this way, the battery unit 90 causes the battery 90a in the connected state among the plurality of batteries 90a to output electric power and stops output of electric power from the other battery 90a in the shut-off state. Control of the connection switcher 131, that is, setting of the battery 90a that outputs electric power from the battery unit 90 is performed by the controller 120.

Each battery 90a includes a battery management unit (BMU) 123 that monitors and controls the battery 90a. The BMU 123 acquires a voltage, a temperature, a current, a terminal voltage of an internal cell, and the like of the battery 90a and calculates a remaining battery level of the battery 90a. Furthermore, the BMU 123 can perform relay opening/closing control inside the battery 90a and can control start and stoppage of electric power supply of the battery 90a. Furthermore, the BMU 123 (detector) can determine whether the battery unit 90 is in a charged state (i.e., being charged) or in a discharged state (i.e., being used) by acquiring a voltage, a current, and the like of the battery 90a. Note that the BMU 123 may be included in each battery 90a or may be installed outside each battery 90a.

The controller 120 sets one of the plurality of batteries 90a as an output battery that outputs electric power from the battery unit 90 by bringing the one battery 90a into the connected state and sets the other battery 90a as a stopped battery that does not output electric power by bringing the other battery 90a into the shut-off state. The controller 120 includes a battery controller 120a that performs control of switching the output battery.

The battery controller 120a is communicably connected to the connection switcher 131 by a wire or wirelessly and controls the connection switcher 131 by transmitting a signal. In this way, the battery controller 120a performs control of switching (processing of switching) the output battery and the stopped battery by switching the connected state and the shut-off state of the plurality of batteries 90a.

The battery controller 120a performs control of switching the output battery and the stopped battery based on a predetermined condition. Specifically, in a case where driving of the working device 20 is prohibited or restricted, the battery controller 120a sets the output battery and the stopped battery based on a selector 122 communicably connected to the controller 120 and a remaining battery level of each of the plurality of batteries 90a.

The battery controller 120a sets, as the output battery, the battery 90a selected by using the selector 122. On the other hand, the battery controller 120a sets, as the stopped battery, the battery 90a that is not selected by using the selector 122. The selector 122 selects one of the plurality of batteries 90a based on worker's operation. That is, the selector 122 receives a worker's instruction to select the battery 90a to be set as the output battery. For example, the selector 122 is a plurality of operation switches that are provided around the seat 8 and can be pressed. The plurality of operation switches are associated with the respective batteries 90a, and when one operation switch is operated, one battery 90a associated with the one operation switch is selected.

In a case where driving of the working device 20 is prohibited or restricted, the battery controller 120a charges the battery unit upon receipt of an instruction to start charging given to the selector 122 by the worker.

In a case where the BMU 123 is detecting a charged state (charging) of the battery unit 90, a fan controller 120b (the controller 120) drives the radiator fan 94a and the oil cooler fan 97a at a predetermined first rotational speed. For example, the first rotational speed is any rotational speed within a predetermined first range. Specifically, while the BMU 123 is detecting a charged state of the battery unit 90, the controller 120 drives the radiator fan 94a and the oil cooler fan 97a at the first rotational speed in a case where a temperature of the battery unit 90 detected by the BMU 123 is equal to or higher than a set temperature and does not drive the radiator fan 94a and the oil cooler fan 97a in a case where the temperature of the battery unit 90 is less than the set temperature. Note that the first rotational speed is a rotational speed lower than a second rotational speed (described later) of the radiator fan 94a and the oil cooler fan 97a in the discharged state (during battery output) of the battery unit 90.

As illustrated in FIG. 8, the swivel working machine 1 includes a first drive motor 30b that drives the oil cooler fan 97a and a second drive motor 94b that drives the radiator fan 94a. The oil cooler fan 97a and the radiator fan 94a can be independently driven separately from the electric motor 91. The following describes control of the oil cooler fan 97a and the radiator fan 94a.

The first drive motor 30b and the second drive motor 94b are connected to the controller 120. The controller 120 includes the fan controller 120b that controls driving of the first drive motor 30b and the second drive motor 94b. The fan controller 120b controls the first drive motor 30b (the radiator fan 94a) and the second drive motor 94b (the oil cooler fan 97a) independently of each other.

As illustrated in FIG. 8, the swivel working machine 1 includes a water temperature detector 126 and an fluid temperature detector 127. The water temperature detector 126 is a sensor that detects a temperature of cooling water (refrigerant) as a voltage value. The water temperature detector 126 is, for example, provided on the feeding water path 95b and detects a temperature of cooling water flowing toward the radiator 94. The water temperature detector 126 is connected to the controller 120 by a wire or wirelessly and outputs, as a signal, detected temperature information of the cooling water to the controller 120.

The fluid temperature detector 127 is a sensor that detects a temperature of a hydraulic fluid as a voltage value. The fluid temperature detector 127 is, for example, provided on a pipe path connected to the oil cooler 97 and detects a temperature of a hydraulic fluid flowing toward the oil cooler 97. The fluid temperature detector 127 is connected to the controller 120 by a wire or wirelessly and outputs, as a signal, detected temperature information of the hydraulic fluid to the controller 120.

In a case where the BMU 123 is detecting the discharged state (battery output, that is, use) of the battery unit 90, the controller 120 drives the oil cooler fan 97a at the second rotational speed based on the temperature of the hydraulic fluid detected by the fluid temperature detector 127. For example, the second rotational speed is any rotational speed within a predetermined second range larger than the first range. Specifically, the fan controller 120b stops driving of the oil cooler fan 97a in a case where the temperature of the hydraulic fluid detected by the fluid temperature detector 127 is less than a predetermined value and controls the temperature of the hydraulic fluid not to exceed a set temperature based on a preset control map in a case where the temperature of the hydraulic fluid detected by the fluid temperature detector 127 is equal to or higher than a predetermined value.

In a case where the BMU 123 is detecting the discharged state (battery output, that is, use) of the battery unit 90, the controller 120 drives the radiator fan 94a at the second rotational speed based on the temperature of the cooling water detected by the water temperature detector 126. Specifically, the fan controller 120b controls driving of the radiator fan 94a so that the temperature of the cooling water does not exceed a set temperature based on the temperature of the cooling water detected by the water temperature detector 126 and a preset control map.

The swivel working machine 1 includes a notifier 124 that is provided around the seat 8 and provides a notification to a worker or an administrator. The notifier 124 includes a display 124a such as a monitor that displays an image and an audio output device 124b (speaker) that provides an audio notification. The notifier 124 provides a notification concerning remaining battery levels of the plurality of batteries 90a calculated by the BMU 123. Furthermore, in the charged state of the battery unit 90, the notifier 124 provides, for example, a notification that the battery unit 90 is being charged and that the radiator fan 94a and the oil cooler fan 97a are being driven at the first rotational speed.

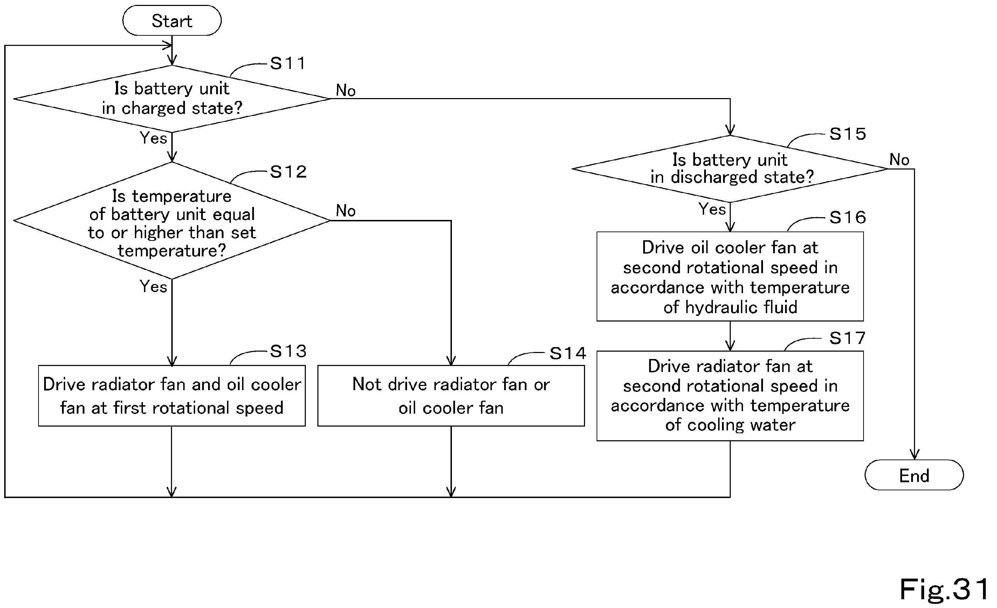

Control processing performed by the fan controller 120b (the controller 120) is described below with reference to FIG. 31. FIG. 31 is a flowchart illustrating processing for controlling the radiator fan and the oil cooler fan. First, the fan controller 120b determines whether or not the BMU 123 is detecting the charged state (charging) of the battery unit 90 (S11). In a case where the battery unit 90 is in the charged state (being charged) (S11, Yes), the fan controller 120b determines whether or not the temperature of the battery unit 90 detected by the BMU 123 is equal to or higher than a set temperature (S12). In a case where the temperature of the battery unit 90 is equal to or higher than the set temperature (S12, Yes), the fan controller 120b drives the radiator fan 94a and the oil cooler fan 97a at the first rotational speed (S13).

In a case where it is determined in S 12 that the temperature of the battery unit 90 is not equal to or higher than the set temperature (S 11, No), that is, the temperature of the battery unit 90 is less than the set temperature, the fan controller 120b does not drive the radiator fan 94a and the oil cooler fan 97a (S14).

In a case where it is determined in S11 that the battery unit 90 is not in the charged state (being charged) (S11, No), the fan controller 120b determines whether or not the battery unit 90 is in the discharged state (being used) (S15). In a case where the battery unit 90 is in the discharged state (being used) (S15, Yes), the fan controller 120b drives the oil cooler fan 97a at the second rotational speed based on a temperature of a hydraulic fluid detected by the fluid temperature detector 127 (S16). The fan controller 120b drives the radiator fan 94a at the second rotational speed based on the temperature of the cooling water detected by the water temperature detector 126 (S17).

The fan controller 120b returns to the process in S11 after S13, S14, or S17.

In a case where it is determined in S15 that the battery unit 90 is not in the discharged state (being used) (S15, No), the fan controller 120b ends this processing.

A swivel working machine 1 as has been discussed includes a swivel base 2, a working device 20 provided on the swivel base 2, an exterior cover 70 to define a space where one or more devices are provided on the swivel base 2, an air exit portion 77 provided at a position on the exterior cover 70 that is located on one side of the machine body (swivel base 2), and a cooling unit CU provided in the space such that the cooling unit CU faces the air exit portion 77, and the cooling unit CU includes a frame body 98 having an opening (e.g., opening(s) 98d and/or 98e), a heat exchanger CA provided at a position on the frame body 98 that corresponds to the opening of the frame body 98 such that the heat exchanger CA faces toward the air exit portion 77, a fan F provided at the same side of the heat exchanger CA as the air exit portion 77 such that an air intake side of the fan F faces toward the heat exchanger CA and an air exit side of the fan F faces toward the air exit portion 77, and a mount portion 105 provided on the opposite side of the frame body 98 from the heat exchanger CA to detachably attach a filter 100 thereto, the filter 100 being configured to catch dust in air sucked toward the opening by the fan F. With this configuration, the ease of maintenance of the heat exchanger CA can be improved. Since the external blow-off fan F is located inside the exterior cover 70 and the heat exchanger CA and the filter 100 are located behind the fan F (that is, the filter 100, the heat exchanger CA, and the fan F are arranged in this order in the upstream-to-downstream direction of the flow of cooling air), it is possible to reduce the adherence of dust to the heat exchanger CA, and prevent or reduce a decrease in cooling performance of the heat exchanger CA.

The exterior cover 70 includes an inspection door 76 openable and closable, and the mount portion 105 is positioned to allow the filter 100 to be attached and detached when the inspection door 76 is open. With this, the filter 100 can be detached from the mount portion 105 by bringing the inspection door 76 into the open state, and therefore the exterior cover 70 need not be removed to clean the filter 100. Since it is easy to detach the filter 100, cleaning of the filter 100 can be assured. This improves the ease of maintenance of the filter 100, the heat exchanger CA, and the like.

Furthermore, since the air exit portion 77 is provided on the inspection door 76, the air exit portion 77 can be cleaned by bringing the inspection door 76 into the open state.

The mount portion 105 includes an attachment/detachment opening 106 to allow the filter 100 to be inserted and removed therethrough, and, when the inspection door 76 is in an open state, the attachment/detachment opening 106 of the mount portion 105 is exposed, and the filter 100 is attached and detached to and from the mount portion 105 through the attachment/detachment opening 106. With this configuration, the filter 100 can be easily attached and detached to and from the mount portion 105.

The heat exchanger CA includes a radiator 94 to cool to-be-cooled device(s) and an oil cooler 97 to cool hydraulic fluid to drive the working device 20 which are arranged side by side and in parallel to the opening of the frame body 98, the fan F includes a radiator fan 94a to suck air through the radiator 94 and an oil cooler fan 97a to suck air through the oil cooler 97, the filter 100 includes a first filter 100A for the radiator 94 and a second filter 100B for the oil cooler 97, the first filter 100A is attached at a position on the mount portion 105 that corresponds to the radiator 94, and the second filter 100B is attached to a position on the mount portion 105 that corresponds to the oil cooler 97. With this configuration, the first filter 100A and the second filter 100B can be easily attached and detached to and from the mount portion 105. Since the radiator fan 94a and the oil cooler fan 97a operate under different conditions, the degrees to which the first filter 100A and the second filter 100B become dirty are also different. By providing the first filter 100A and the second filter 100B which are independent of each other, the first filter 100A and the second filter 100B can be cleaned at different times.

The mount portion 105 includes an attachment/detachment opening to allow the filter 100 to be inserted and removed therethrough, a dimension L21 of the attachment/detachment opening 106 in a longitudinal direction is shorter than a total dimension L20 of the first filter 100A and the second filter 100B in an arrangement direction which is a direction in which the first filter 100A and the second filter 100B are arranged and is longer than each of dimensions L22 and L23 of the first filter 100A and the second filter 100B, and the mount portion 105 includes a first holding portion 107A to hold, at a first position P1 away from the attachment/detachment opening 106, one of the first filter 100A and the second filter 100B that has been inserted through the attachment/detachment opening 106 such that the one of the first filter 100A and the second filter 100B is slidable in the arrangement direction, and a second holding portion 107B to hold the other of the first filter 100A and the second filter 100B that has been inserted through the attachment/detachment opening 106 with the first filter 100A and the second filter 100B held by the first holding portion 107A. With this configuration, the first filter 100A and the second filter 100B can be attached and detached in a predetermined order.

The first filter 100A and the second filter 100B each include a grip portion 101 to be gripped when a corresponding one of the first filter 100A and the second filter 100B is attached to or detached from the mount portion 105. With this configuration, the first filter 100A can be attached and detached by gripping the grip portion 101 of the first filter 100A, and the second filter 100B can be attached and detached by gripping the grip portion 101 of the second filter 100B. This makes it possible to easily perform work of attaching and detaching the filters.

The grip portion 101 of the first filter 100A and the grip portion 101 of the second filter 100B each include a flange portion 101b bent from a distal end of an extension portion 101a projecting upward relative to the attachment/detachment opening 106 with the first filter 100A and the second filter 100B attached to the mount portion 105, and include, in the flange portion 101b, a fixing tool 102 to be used to fix the flange portion 101b to the mount portion 105. With this configuration, the first filter 100A and the second filter 100B can each be fixed to the mount portion 105 using the fixing tool 102 of the flange portion 101b.

The swivel working machine may be configured such that, in a case where the other of the first filter 100A and the second filter 100B is inserted through the attachment/detachment opening 106 before the one of the first filter 100A and the second filter 100B, even if the other of the first filter 100A and the second filter 100B is to be slid toward the first position P1 in the arrangement direction, the flange portion 101b of the other of the first filter 100A and the second filter 100B contacts the attachment/detachment opening at a position where an available dimension L30, which is a dimension of the attachment/detachment opening 106 in the longitudinal direction excluding a portion where the other of the first filter 100A and the second filter 100B is positioned, is shorter than a dimension of the one of the first filter 100A and the second filter 100B (e.g., the dimension L22 of the first filter 100A) in the arrangement direction, and the other of the first filter 100A and the second filter 100B is prevented from sliding toward the first position P1. In this state, the first filter 100A cannot be attached to the mount portion 105, and it is therefore possible to prevent the first filter 100A and the second filter 100B from being attached in a wrong way. That is, it is possible to prevent the second filter 100B and the first filter 100A from being attached to the mount portion 105 in this order in a wrong way.

The swivel working machine 1 includes a battery unit 90, an electric motor 91 to be driven by electric power output by the battery unit 90, an inverter 92b to regulate electric power to be output to the electric motor 91, and a water cooling path 95 to allow cooling water to circulate from the radiator 94 back to the radiator 94 after passing through at least one of the inverter 92b, the electric motor 91, or the battery unit 90. With this configuration, cooling water in the radiator 94 is cooled by the radiator fan 94a (fan F) and thus the inverter 92b and the electric motor 91 can be cooled by the cooling water, the radiator fan 94a can be used also as a battery fan, air around the battery unit 90 can be discharged to the outside, and the battery unit 90 can be air-cooled.

The battery unit 90 is provided at a rear portion of the swivel base 2, the inverter 92b is provided above the battery unit 90, the electric motor 91 is provided at one side of the battery unit, and the heat exchanger CA and the fan F are provided above the electric motor 91. With this configuration, air around the inverter 92b, air around the battery unit 90, and air above the electric motor 91 can be discharged to the outside of the exterior cover 70, and the inverter 92b and the battery unit 90 can be air-cooled.

A hydraulic pump P to be driven by the electric motor 91 to deliver hydraulic fluid is provided, the electric motor 91 and the hydraulic pump P are arranged in the front-rear direction at one side of the battery unit 90, and the heat exchanger CA and the fan F are provided above the electric motor 91 and the hydraulic pump P. With this configuration, air around the inverter 92b, air around the battery unit 90, and air above the electric motor 91 and the hydraulic pump P can be discharged to the outside of the exterior cover 70, and the inverter 92b and the battery unit 90 can be air-cooled.

A swivel working machine 1 as has been discussed includes a swivel base 2, a working device 20 provided on the swivel base 2, a battery unit 90, a cooling unit CU including a fan F to suck air from the battery unit 90 side and a heat exchanger CA to cool a to-be-cooled target using air sucked by the fan F, a BMU 123 (detector) to detect whether the battery unit 90 is in a charged state or in a discharged state, and a controller 120 to control driving of the fan F, and the controller 120 drives the fan F at a predetermined first rotational speed when the BMU 123 detects the charged state of the battery unit 90. With this configuration, when the battery unit 90 is in the charged state, the heat exchanger CA can be cooled, the fan F can be used also as a battery fan, air around the battery unit 90 can be discharged to the outside, and the battery unit 90 can be cooled. That is, the battery unit 90 and the heat exchanger CA can be cooled when the battery unit 90 is in the charged state.

An electric motor 91 to be driven by electric power output by the battery unit 90 and a hydraulic pump P to be driven by the electric motor 91 to deliver hydraulic fluid are provided, the cooling unit CU includes (i) a first cooling unit CU1 including a radiator fan 94a to suck air from the battery unit 90 side and a radiator 94 to cool cooling water to cool a to-be-cooled device using the air sucked by the radiator fan 94a and (ii) a second cooling unit CU2 including an oil cooler fan 97a to suck air from the battery unit 90 side and an oil cooler 97 to cool the hydraulic fluid using the air sucked by the oil cooler fan 97a , and the controller 120 drives at least one of the radiator fan 94a or the oil cooler fan 97a at a first rotational speed when the BMU 123 detects the charged state of the battery unit 90. With this configuration, when the battery unit 90 is in the charged state, the radiator 94 and the oil cooler 97 can be cooled, the radiator fan 94a and the oil cooler fan 97a can be used also as battery fans, air around the battery unit 90 can be discharged to the outside, and the battery unit 90 can be cooled. That is, when the battery unit 90 is in the charged state, the battery unit 90, the radiator 94, and the oil cooler 97 can be cooled.

The swivel working machine 1 includes a BMU 123 (temperature detector) to detect the temperature of the battery unit 90, and the controller 120, when the detector detects the charged state of the battery unit 90, drives the radiator fan 94a and the oil cooler fan 97a at the first rotational speed if the temperature of the battery unit 90 detected by the BMU 123 is equal to or higher than a set temperature and does not drive the radiator fan 94a or the oil cooler fan 97a if the temperature of the battery unit 90 is less than the set temperature. With this configuration, the battery unit 90, the radiator 94, and the oil cooler 97 can be appropriately cooled according to the temperature of the battery unit 90 in the charged state.

The predetermined first rotational speed is a rotational speed lower than a second rotational speed of the fan F that is set to cool the to-be-cooled target when the battery unit 90 is in the discharged state. This makes it possible to charge the battery unit 90 while preventing or reducing a rise in temperature when the battery unit 90 is in the charged state.

The controller 120, when the BMU 123 (detector) detects the discharged state of the battery unit 90, controls driving of the oil cooler fan 97a based on the temperature of hydraulic fluid detected by the fluid temperature detector 127. With this configuration, cooling using the oil cooler 97 can be performed in accordance with the temperature of the hydraulic fluid when the battery unit 90 is in the discharged state (i.e., during use).

The swivel working machine 1 includes a water temperature detector 126 to detect the temperature of cooling water, and the controller 120, when the BMU 123 detects the discharged state of the battery unit 90, controls driving of the radiator fan 94a based on the temperature of the cooling water detected by the water temperature detector 126. With this configuration, cooling using the radiator fan 94a can be performed in accordance with the temperature of the cooling water when the battery unit 90 is in the discharged state (i.e., during use).

The swivel working machine 1 includes an exterior cover 70 to cover the battery unit 90, the electric motor 91, and the hydraulic pump P, and the radiator fan 94a and the oil cooler fan 97a discharge air outward in the width direction from the space defined by the exterior cover 70. With this configuration, hot air around the battery unit 90, the electric motor 91, and the hydraulic pump P can be discharged to the outside, and a rise in temperature of the battery unit 90, the electric motor 91, and the hydraulic pump P can be prevented or reduced.

### < First Variation>

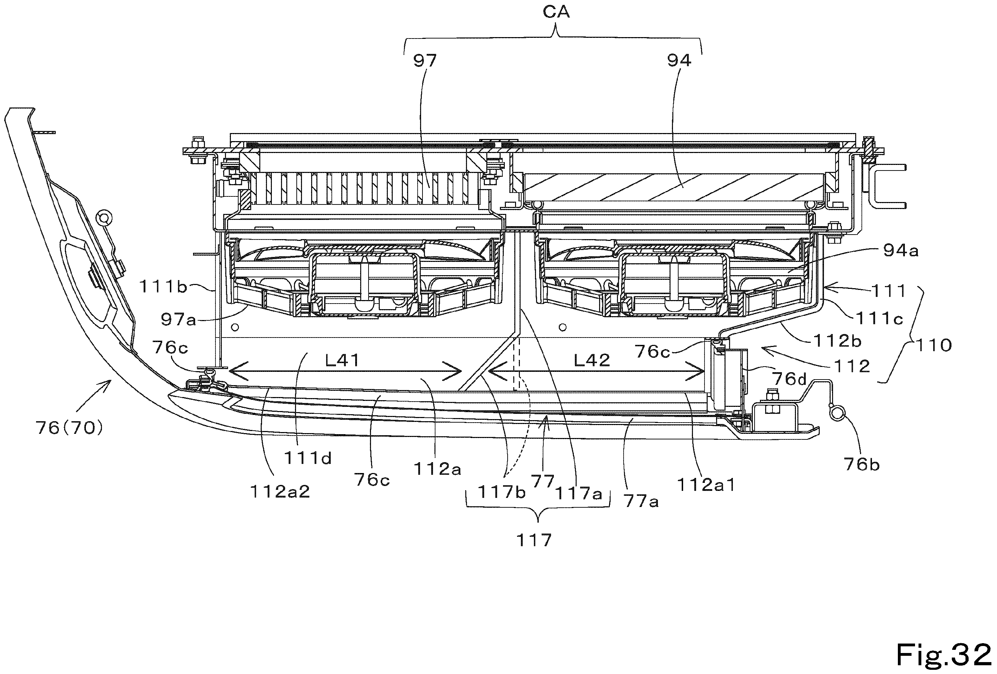

A first variation is described with reference to FIG. 32. FIG. 32 is a horizontal cross-sectional view of the right hood illustrating a duct configuration formed by the shroud 110 of the cooling unit CU and the inspection door 76 according to the first variation.

As illustrated in FIG. 32, the cooling unit CU according to the first variation is configured such that the shroud 110 includes a partition wall 117 that separates the radiator fan 94a and the oil cooler fan 97a. That is, the partition wall 117 separates a space for guiding cooling air generated by the radiator fan 94a and a space for guiding cooling air generated by the oil cooler fan 97a. Specifically, the partition wall 117 includes a first extension portion 117a located on the fixing portion 111 and a second extension portion 117b located on the guide portion 112. The first extension portion 117a is coupled to the upper edge portion 111a and the lower edge portion llld and extends linearly toward the air exit portion 77 so as to be located between the radiator fan 94a and the oil cooler fan 97a on the upper edge portion 111a and the lower edge portion 111d of the fixing portion 111. The second extension portion 117b is bent and extends from an end of the first extension portion 117a on an exhaust downstream side toward the oil cooler fan 97a. Accordingly, a left opening width L41 and a right opening width L42 separated by the partition wall 117 are identical or substantially identical. Specifically, the left opening width L41 is a length from a left end portion of the air exit portion 77 to the second extension portion 117b. The right opening width L42 is a length from the second extension portion 117b to a right end portion of the air exit portion 77. In other words, the left opening width L41 is a length from the left edge portion 111b of the fixing portion 111 of the shroud 110 to the second extension portion 117b, and the right opening width L42 is a length from the second extension portion 117b to the rib 76d of the inspection door 76. Accordingly, an opening size of the air exit portion 77 on the oil cooler fan 97a side and an opening size of the air exit portion 77 on the radiator fan 94a side can be made identical or substantially identical.

Note that the partition wall 117 may have such a shape that the second extension portion 117b extends on a line extended from the first extension portion 117a as indicated by the broken line in FIG. 32. In this case, the opening size of the air exit portion 77 on the oil cooler fan 97a side can be made larger than the opening size of the air exit portion 77 on the radiator fan 94a side.

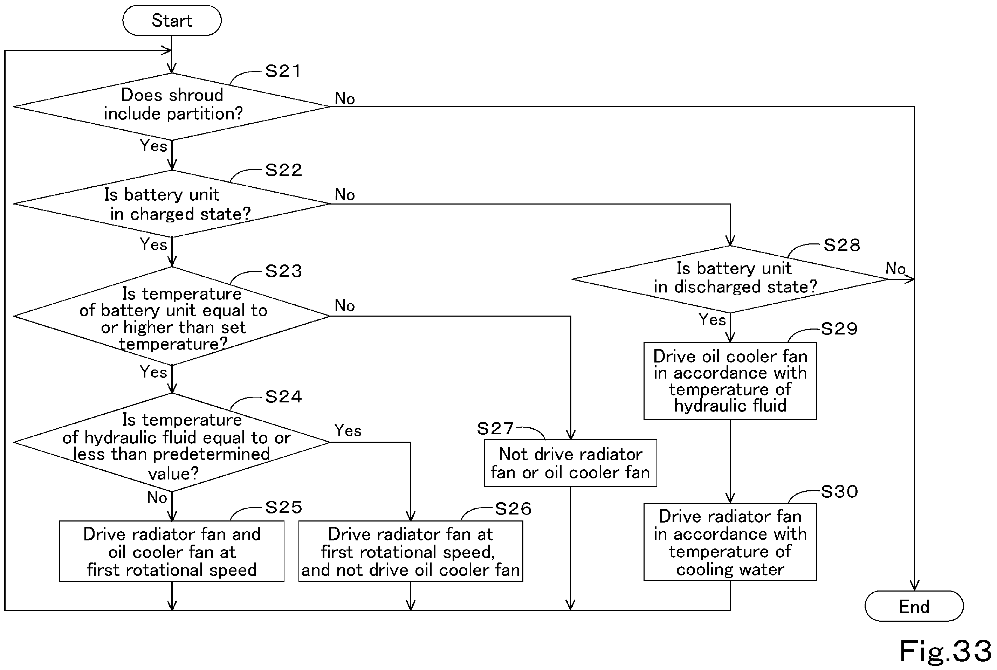

Control processing performed by the fan controller 120b (the controller 120) is described below with reference to FIG. 33. FIG. 33 is a flowchart illustrating control processing of the first variation. First, the fan controller 120b determines whether or not the partition wall 117 of the shroud 110 is present (S21). For example, in a case where the shroud 110 includes the partition wall 117, information indicating that the storing unit 121 includes the partition wall 117 is stored in advance in the storing unit 121. Accordingly, the fan controller 120b determines that the storing unit 121 includes the partition wall 117 based on this information (S21, Yes), and determines whether or not the BMU 123 is detecting the charged state (charging) of the battery unit 90 (S22).

In a case where the battery unit 90 is in the charged state (being charged) (S22, Yes), the fan controller 120b determines whether or not the temperature of the battery unit 90 detected by the BMU 123 is equal to or higher than a set temperature (S23). In a case where the temperature of the battery unit 90 is equal to or higher than the set temperature (S23, Yes), the fan controller 120b determines whether or not the temperature of the hydraulic fluid detected by the fluid temperature detector 127 is equal to or less than a predetermined value (S24). In a case where the temperature of the hydraulic fluid is not equal to or less than the predetermined value (S24, No), the fan controller 120b drives the radiator fan 94a and the oil cooler fan 97a at the first rotational speed (S25). In a case where the temperature of the hydraulic fluid is equal to or less than the predetermined value (S24, Yes), the fan controller 120b drives the radiator fan 94a at the first rotational speed and does not drive the oil cooler fan 97a (S26).

In a case where it is determined in S23 that the temperature of the battery unit 90 is not equal to or higher than the set temperature (S23, No), that is, the temperature of the battery unit 90 is less than the set temperature, the fan controller 120b does not drive the radiator fan 94a and the oil cooler fan 97a (S27).

In a case where it is determined in S22 that the battery unit 90 is not in the charged state (being charged) (S22, No), the fan controller 120b determines whether or not the battery unit 90 is in a discharged state (being used) (S28). In a case where the battery unit 90 is in the discharged state (being used) (S28, Yes), the fan controller 120b drives the oil cooler fan 97a at the second rotational speed based on the temperature of the hydraulic fluid detected by the fluid temperature detector 127 (S29). The fan controller 120b drives the radiator fan 94a at the second rotational speed based on the temperature of the cooling water detected by the water temperature detector 126 (S30).

The fan controller 120b returns to the process in S21 after S25, S26, S27, or S30.

In a case where it is determined in S28 that the battery unit 90 is not in the discharged state (being used) (S28, No) or in a case where the information indicating that the shroud 110 includes the partition wall 117 is not stored in the storing unit 121 (S21, No), the fan controller 120b ends this processing.

In the swivel working machine 1 according to the first variation, the shroud 110 includes the partition wall 117 that separates the radiator fan 94a and the oil cooler fan 97a, and while the BMU 123 (detector) is detecting the charged state of the battery unit 90, the controller 120 stops driving of the oil cooler fan 97a and continues to drive the radiator fan 94a at the first rotational speed in a case where the temperature of the hydraulic fluid detected by the fluid temperature detector 127 is equal to or less than a predetermined value. With this configuration, in the charged state of the battery unit 90, it is possible to keep the temperature of the hydraulic fluid from becoming equal to or less than a predetermined value, and it is possible to continue cooling of the battery unit 90 and the radiator 94 by driving the radiator fan 94a at the first rotational speed.

A swivel working machine 1 as has been described includes a swivel base 2, a working device 20 provided on the swivel base 2, and a cooling unit CU, wherein the cooling unit CU is a combined unit of a frame body 98 having an opening 98d, 98e, a heat exchanger CA attached to a position on one surface of the frame body 98 that corresponds to the opening 98d, 98e, a fan unit FU provided at the opposite side of the heat exchanger CA from the frame body 98 such that an air intake side thereof faces toward the heat exchanger CA, and a shroud 110 to guide exhaust air from the fan unit FU, and the cooling unit CU is attached to a fixing bracket 37 provided on a support frame 35 provided on the swivel base 2. With this configuration, the cooling unit CU can be attached to the support frame 35 on the swivel base 2 by performing the work of attaching only once. It is therefore possible to improve productivity of the swivel working machine. For example, by using a configuration in which a cooling system that includes a large number of components is assembled in advance, that is, by using the cooling unit CU, the time taken for the assembly in a main line can be shortened. For example, the swivel working machine can be produced within the same takt time as a diesel swivel working machine. This allows mixed production. Furthermore, since the whole cooling unit CU can be detached during service maintenance, the time for access to the electric motor 91 and the hydraulic pump P positioned below the cooling unit CU can be shortened.

The fixing bracket 37 includes a temporary placement portion 37e for temporary placement of the cooling unit CU during work of attaching the cooling unit CU. With this configuration, it is possible to assist in the work of attaching the cooling unit CU, making it easy to attach the cooling unit CU.

The temporary placement portion 37e is positioned such that a height position of the temporarily placed cooling unit CU matches a height at which the cooling unit CU is attached to the fixing bracket 37. With this configuration, when the cooling unit CU is temporarily placed on the temporary placement portion 37e, the height of the cooling unit CU matches the height at which the cooling unit CU is attached to the fixing bracket 37, and therefore the burden of positioning of the cooling unit CU in the height direction can be reduced. It is therefore easy to attach the cooling unit CU.

The frame body 98 includes a fixed portion 98b which is fixed to the fixing bracket 37 with a fastener 39 to fix the cooling unit CU to the fixing bracket 37, and the fixed portion 98b is positioned such that the fixed portion 98b does not to overlap the heat exchanger CA, the fan unit FU, or the shroud 110 when viewed from an air exit side of the cooling unit CU. With this configuration, in a case where the cooling unit CU is attached to the fixing bracket 37, the fixed portion 98b of the frame body 98 of the cooling unit CU can be easily accessed, and work of fixing the cooling unit CU to the fixing bracket 37 with the fastener 39 is easily performed.

The cooling unit CU is an assembly which has attached thereto at least one of a hose for cooling water (e.g., feeding water path 95b, return water path 95c, and/or the like) connected to the radiator 94 or a hose OH for hydraulic fluid connected to the oil cooler 97. With this configuration, the cooling unit CU having attached thereto at least one of the hose for cooling water or the hose for hydraulic fluid can be attached to the fixing bracket 37 of the support frame 35 on the swivel base 2. It is possible to reduce the burden of work of attaching the hose for cooling water, the hose for hydraulic fluid, and the like after the cooling unit CU is attached to the fixing bracket 37.

A mount portion 105 where a filter 100 to catch dust in air sucked by the fan unit FU is mounted is provided on the opposite surface of the frame body 98 from the one surface. With this configuration, the cooling unit CU is a unit in which the mount portion 105 on which the filter 100 is attached is further provided in addition to the frame body 98, the heat exchanger CA, the fan F, and the shroud 110. The filter 100 can be attached to the mount portion 105, and the cooling unit CU with the filter 100 attached can be attached to the fixing bracket 37 of the support frame 35 on the swivel base 2.

The filter 100 includes a first filter 100A for the radiator 94 and a second filter 100B for the oil cooler 97, and the first filter 100A and the second filter 100B are arranged side by side on the mount portion 105 in parallel to the opening of the frame body 98. With this configuration, the cooling unit CU with the first filter 100A and the second filter 100B attached can be attached to the fixing bracket 37 of the support frame 35 on the swivel base 2.

The cooling unit CU includes an attachment portion 98a to which a hoisting tool is attached. With this configuration, the cooling unit CU includes an attachment portion 98a to which the hoisting tool is attached, and therefore the cooling unit CU can be hoisted up using a crane or the like using the hoisting tool attached to the attachment portion 98a, and the burden of work of attaching the cooling unit CU can be reduced.

The swivel working machine 1 includes a battery unit 90, an electric motor 91 to be driven by electric power output by the battery unit 90, and a hydraulic pump P to be driven by the electric motor 91 to deliver hydraulic fluid, the electric motor 91 and the hydraulic pump P are provided at one side of the battery unit 90, and the cooling unit CU is provided at the one side of the battery unit 90 and above the hydraulic pump P and the electric motor 91. With this configuration, air around the battery unit 90 can be discharged to the outside by the radiator fan 94a and the oil cooler fan 97a of the cooling unit CU, and the battery unit 90 can be air-cooled.

The swivel working machine 1 includes an exterior cover 70 to cover the cooling unit CU, the battery unit 90, the electric motor 91, and the hydraulic pump P, and an inspection door 76 openable and closable with respect to the exterior cover 70 and including an air exit portion 77, and the radiator fan 94a and the oil cooler fan 97a discharge air through the air exit portion 77 outward in the width direction from a space defined by the exterior cover 70. With this configuration, air around the battery unit 90 can be discharged to the outside through the air exit portion 77 of the exterior cover 70 by the radiator fan 94a and the oil cooler fan 97a of the cooling unit CU, making it possible to air-cool devices provided within the exterior cover 70 such as the battery unit 90, the electric motor 91, and the hydraulic pump P.

In the swivel working machine 1, when the inspection door 76 is brought into the closed state, an opening edge portion 110a of the shroud 110 makes contact with a portion of the inspection door 76 that surrounds the air exit portion 77. This forms a duct to guide cooling air generated by the fan F to the air exit portion 77, thus allowing the cooling air to be reliably discharged to the outside through the air exit portion 77 and preventing the cooling air from circling back toward the air intake side. It is therefore possible to improve the performance of discharging cooling air and the performance of cooling using the cooling air. When the inspection door 76 is brought into the closed state, the opening edge portion 110a of the shroud 110 merely makes contact with the portion of the inspection door 76 that surrounds the air exit portion 77, and the inspection door 76 does not include a duct member, and therefore the inspection door 76 may be reduced in weight, simplified, and made compact. This can reduce the burden of opening/closing the inspection door 76, and makes it unnecessary to increase the strength of a holding bracket to hold the inspection door 76, thus achieving good productivity and low cost.

The inspection door 76 includes, on an inner side thereof, an elastic body 76c provided at the portion surrounding the air exit portion 77, and the elastic body 76c is elastically deformed upon contact with the opening edge portion 110a of the shroud 110 when the inspection door 76 is in the closed state to seal a contact area between the inspection door 76 and the opening edge portion 110a of the shroud 110. With this configuration, the opening edge portion 110a of the shroud 110 and the inner side of the inspection door 76 can be brought into close contact with each other. This allows cooling air to be more reliably discharged to the outside through the air exit portion 77 and prevents the cooling air from circling back toward the air intake side. Furthermore, the shock resulting from closing the inspection door 76 can be absorbed by the elastic body 76c, and impact force and impact sound can be reduced.

The heat exchanger CA includes a radiator 94 to cool the cooling water to cool a to-be-cooled device and an oil cooler 97 to cool hydraulic fluid to drive the working device 20, the radiator 94 and the oil cooler 97 are arranged side by side on one surface of a rectangular frame body 98 in parallel to the opening of the frame body 98, the fan F includes a radiator fan 94a to cool the radiator 94 and an oil cooler fan 97a to cool the oil cooler 97, the radiator fan 94a and the oil cooler fan 97a are arranged side by side in parallel to the opening of the frame body 98, and the shroud 110 includes a tubular fixing portion 111 to surround both the radiator fan 94a and the oil cooler fan 97a and a guide portion extending from the fixing portion 111 toward the air exit portion 77 to guide cooling air generated by driving of the radiator fan 94a and cooling air generated by driving of the oil cooler fan 97a. With this configuration, when the inspection door 76 is in the closed state, the opening edge portion 110a of the shroud 110 makes contact with a portion of the inspection door 76 that surrounds the air exit portion 77. This defines a duct to guide cooling air generated by the radiator fan 94a and cooling air generated by the oil cooler fan 97a to the air exit portion 77, thus allowing both the cooling air generated by the radiator fan 94a and the cooling air generated by the oil cooler fan 97a to be efficiently discharged to the outside through the air exit portion 77. It is therefore possible to improve exhaust performance and cooling performance of the swivel working machine.

The fixing portion 111 is a rectangular-tubular frame including an upper edge portion 111a, a left edge portion 111b, a lower edge portion 111d, and a right edge portion 111c, both of the radiator fan 94a and the oil cooler fan 97a are surrounded by the rectangular-tubular frame, and the fixing portion 111 includes, at the lower edge portion 111d, a first elastic support body 113 to support a case lower portion corresponding to the radiator fan 94a and a second elastic support body 114 to support a case lower portion corresponding to the oil cooler fan 97a. With this configuration, the vibration of the radiator fan 94a is reduced by the first elastic support body 113 on the lower edge portion 111d of the fixing portion 111, and the vibration sound of the radiator fan 94a can be reduced. Furthermore, the vibration of the oil cooler fan 97a is reduced by the second elastic support body 114 on the lower edge portion 111d of the fixing portion 111, and the vibration sound of the oil cooler fan 97a can be reduced.

The lower edge portion 111d includes a first cutout portion 115 in a portion corresponding to the case lower portion corresponding to the radiator fan 94a and a second cutout portion 116 in a portion corresponding to the case lower portion corresponding to the oil cooler fan 97a, the first elastic support body 113 is provided in the first cutout portion 115, and the second elastic support body 114 is provided in the second cutout portion 116. With this configuration, an increase in dimension of the fixing portion 111 in the up-down direction can be reduced as compared with the case where the first elastic support body 113 and the second elastic support body 114 are provided on the lower edge portion 111d, and the shape of the fixing portion 111 can be minimized such that the lower edge portion 111d is close to and make contact with the case lower portion corresponding to the radiator fan 94a and the case lower portion corresponding to the oil cooler fan 97a. Furthermore, the vibration sound of the radiator fan 94a and the oil cooler fan 97a can be reduced.

The air exit portion 77 is a mesh member and is sized to extend downward to a greater extent than an opening of the fixing portion 111, the guide portion 112 includes a downwardly-sloping extension portion 112a extending diagonally outward and downward from an edge of the lower edge portion 111d of the fixing portion 111, and the downwardly-sloping extension portion 112a makes contact with at least one of the lower edge portion 77a of the air exit portion 77 or an outer portion 76a located radially outward of the lower edge portion 77a. With this configuration, it is possible to achieve a duct configuration that matches the shape of the air exit portion 77 extending downward to a greater extent than the opening of the fixing portion 111 of the shroud 110. Furthermore, a decrease in exhaust performance resulting from the mesh of the air exit portion 77 can be compensated for by causing the size of the opening edge portion 110a of the shroud 110 to be larger than the dimension of the opening of the fixing portion 111 in the up-down direction. Furthermore, the radiator fan 94a and the oil cooler fan 97a can be located at a high position. Furthermore, if water, dirt, or the like enters the inside of the inspection door 76 through the air exit portion 77, such water, dirt, or the like is discharged/guided toward the inspection door 76 because of the slope of the downwardly-sloping extension portion 112a and can be kept from entering the cooling unit CU.

The guide portion 112 includes a right-side bent extension portion 112b bent from an edge of the right edge portion of the fixing portion 111 and extending in a radially inward direction of the opening of the fixing portion 111, the inspection door 76 includes an opening/closing shaft 76b to allow the inspection door 76 to be opened and closed with respect to the exterior cover 70, the opening/closing shaft 76b is provided at a position on the exterior cover 70 that corresponds to the right edge portion of the fixing portion 111, and the right-side bent extension portion 112b projects from the fixing portion 111 to a lesser extent (by a dimension L11) than the downwardly-sloping extension portion 112a (projecting by a dimension L12). With this configuration, in a case where the inspection door 76 is in the open state, the space for maintenance can be ensured between the right-side bent extension portion 112b and the exterior cover 70. This makes it easy to perform maintenance work. For example, a handle portion (not illustrated) to be operated when the front right hood 75 is detached is located between the right-side bent extension portion 112b and the exterior cover 70, and this handle portion can be easily operated.

Furthermore, since an upper hood 71 (upper cover) of the exterior cover 70 is detachably attached to a support frame 35 provided on the swivel base 2, the upper cover can be detached without detaching the protection mechanism 80 (a cabin, a canopy, or the like) provided on the swivel base 2, and the work can be performed with the upper cover detached.

### <Second Variation>

A second variation is described. As illustrated in FIG. 8, the swivel working machine 1 may include a detector 128 such as a detection switch that detects opening and closing of the inspection door 76. The detector 128 outputs a detection signal indicating an open state to the controller 120 in a case where the inspection door 76 is in an open state, and outputs a detection signal indicating a closed state in a case where the inspection door 76 is in a closed state. The controller 120 may control at least one of the electric motor 91, the radiator fan 94a, and the oil cooler fan 97a based on a detection signal from the detector 128. In the second variation, in a case where the open state of the inspection door 76 is detected by the detector 128, the controller 120 drives the electric motor 91 at a rotational speed lower than that in a case where the inspection door 76 is in the closed state. The controller 120 stops rotation of the radiator fan 94a and the oil cooler fan 97a in a case where the open state of the inspection door 76 is detected by the detector 128.

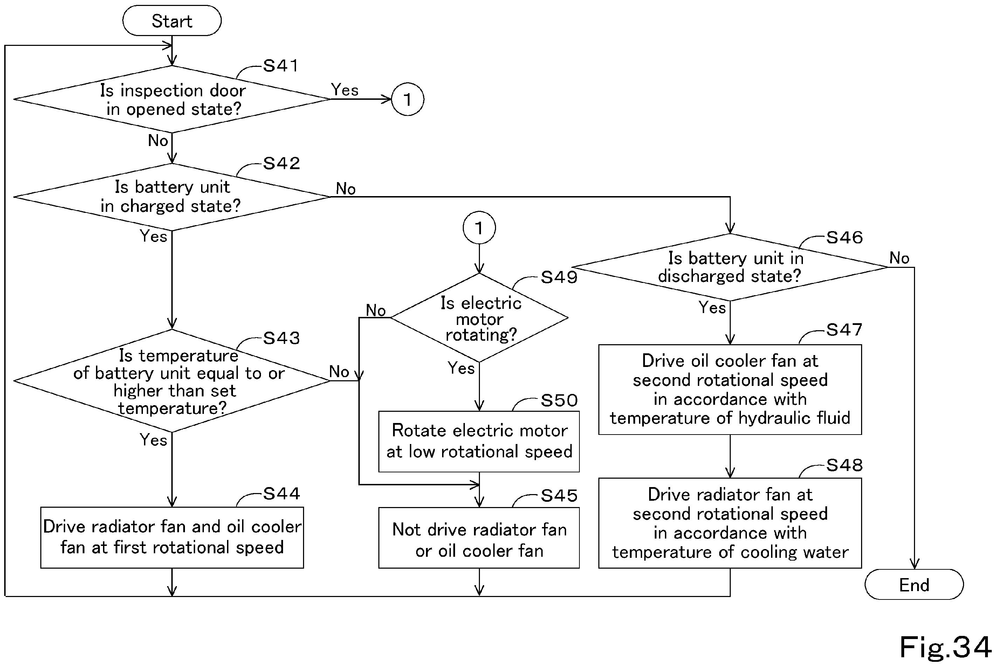

Control processing performed by the fan controller 120b (the controller 120) is described below with reference to FIG. 34. FIG. 34 is a flowchart illustrating the control processing according to the second variation. First, the fan controller 120b determines whether or not the inspection door 76 is in an open state based on a detection signal from the detector 128 (S41). In a case where the detection signal indicates a closed state, the fan controller 120b determines that the inspection door 76 is in a closed state (S41, No) and determines whether or not the BMU 123 is detecting a charged state (charging) of the battery unit 90 (S42).

In a case where the battery unit 90 is in the charged state (being charged) (S42, Yes), the fan controller 120b determines whether or not the temperature of the battery unit 90 detected by the BMU 123 is equal to or higher than a set temperature (S43). In a case where the temperature of the battery unit 90 is equal to or higher than the set temperature (S43, Yes), the fan controller 120b drives the radiator fan 94a and the oil cooler fan 97a at the first rotational speed (S25).

In a case where it is determined in S43 that the temperature of the battery unit 90 is not equal to or higher than the set temperature (S43, No), that is, the temperature of the battery unit 90 is less than the set temperature, the fan controller 120b does not drive the radiator fan 94a and the oil cooler fan 97a (S27).

In a case where it is determined in S42 that the battery unit 90 is not in the charged state (being charged) (S42, No), the fan controller 120b determines whether or not the battery unit 90 is in a discharged state (being used) (S46). In a case where the battery unit 90 is in the discharged state (being used) (S46, Yes), the fan controller 120b drives the oil cooler fan 97a at the second rotational speed based on the temperature of the hydraulic fluid detected by the fluid temperature detector 127 (S47). The fan controller 120b drives the radiator fan 94a at the second rotational speed based on the temperature of the cooling water detected by the water temperature detector 126 (S48).

In a case where the detection signal indicates an open state in S41, the fan controller 120b determines that the inspection door 76 is an open state (S41, Yes) and determines whether or not the electric motor 91 is rotating (S49). For example, the rotational speed controller 120c controls the rotational speed of the electric motor 91. Therefore, in a case where the rotational speed controller 120c sets the rotational speed of the electric motor 91 to a rotational speed other than "zero", the fan controller 120b determines that the electric motor 91 is rotating (S49, Yes). In a case where it is determined that the electric motor 91 is rotating (S49, Yes), the fan controller 120b rotates the electric motor 91 at a rotational speed (e.g., 500 rpm) lower than usual (S50). In a case where it is determined that the electric motor 91 is not rotating (S49, No) or after the process in S50, the fan controller 120b proceeds to the process in S45.

The fan controller 120b returns to the process in S41 after S44, S45, or S48.

It is determined in S46 that the battery unit 90 is not in a discharged state (being used) (S46, No), the fan controller 120b ends this processing.

In a swivel working machine 1 according to the second variation, in a case where an open state of the inspection door 76 is detected by a detector 128, the controller 120 drives the electric motor 91 at a rotational speed lower than that in a case where the inspection door 76 is in a closed state. With this configuration, when the inspection door 76 is in the open state, electric power consumption of the electric motor 91 can be reduced as compared to the case where the inspection door 76 is in the closed state. It is therefore possible to efficiently use electric energy.

In the swivel working machine 1, in the case where the open state of the inspection door 76 is detected by the detector 128, the controller 120 stops rotation of the radiator fan 94a and the oil cooler fan 97a. With this configuration, inspection can be performed with the radiator fan 94a and the oil cooler fan 97a not rotating, and electric power consumption of the radiator fan 94a and the oil cooler fan 97a can be set to zero. It is therefore possible to efficiently use electric energy.

The radiator 94 includes, in an upper portion thereof, a water supply portion 94c supplied with cooling water, and the exterior cover 70 includes a lid portion 75a that is detachable in a portion corresponding to the water supply portion 94c independently of the inspection door 76. With this configuration, cooling water can be supplied to the water supply portion 94c of the radiator 94 by detaching the lid portion 75a of the exterior cover 70. Since the cooling water can be supplied without having to open the inspection door 76, it is possible to eliminate or reduce the likelihood that the rotational speed of the electric motor 91 will decrease and the rotation of the radiator fan 94a and the oil cooler fan 97a will stop when the inspection door 76 is opened.

Although an example in which the present invention is applied to a swivel working machine such as a backhoe has been described in the above embodiment, a target to which the present invention is applied is not limited to this, and the present invention may be applied to other construction machines such as a wheel loader, a compact track loader, and a skid-steer loader or may be applied to agricultural machines such as a tractor, a combine, a rise planter, and a lawn mower.

While embodiments of the present invention have been described above, it is to be understood that the embodiments disclosed herein are considered as examples in all aspects and are not considered as limitations. The scope of the present invention is to be determined not by the foregoing description but by the claims, and is intended to include all variations and modifications within the scope of the claims and their equivalents.

### Reference Signs List

- 1: swivel working machine

- 2: swivel base
- 20: working device
- 30: oil cooler
- 30a: oil cooler fan
- 35: support frame
- 37: fixing bracket
- 37e: temporary placement portion
- 39: fastener
- 70: exterior cover
- 73a: air intake port
- 75a: lid portion
- 76: inspection door
- 76c: elastic body
- 77: air exit portion
- 90: battery unit
- 91: electric motor
- 92b: inverter
- 94: radiator
- 94c: water supply portion
- 94a: radiator fan
- 97: oil cooler
- 97a: oil cooler fan
- 98: frame body
- 98a: attachment portion
- 98d: opening
- 98e: opening
- 100: filter
- 100A: first filter
- 100B: second filter
- 101: grip portion
- 101a: extension portion
- 101b: flange portion
- 102: fixing tool
- 105: mount portion
- 106: attachment/detachment opening
- 110: shroud
- 110a: opening edge portion
- 111: fixed portion
- 111a: upper edge portion
- 111b: left edge portion
- 111d: lower edge portion
- 111c: right edge portion
- 112: guide portion
- 112a: downwardly-sloping extension portion
- 112b: right-side bent extension portion
- 113: first elastic support body
- 114: second elastic support body
- 115: first cutout portion
- 116: second cutout portion
- 117: partition wall
- 120: controller
- 123: BMU (detector, temperature detector)
- 126: water temperature detector
- 127: fluid temperature detector
- 128: detector
- CA: heat exchanger (cooler)
- CU: cooling unit
- CU1: first cooling unit
- CU2: second cooling unit
- F: fan
- P: hydraulic pump

## Claims

1. A swivel working machine comprising:
a swivel base;
a working device provided on the swivel base;
an exterior cover to define a space where one or more devices are provided on the swivel base;
an inspection door openably and closably provided in the exterior cover and including an air exit portion;
a cooling unit including a fan to discharge cooling air sucked from an interior of a machine body toward the air exit portion and a heat exchanger to cool a to-be-cooled target using cooling air sucked by the fan; and
a shroud to surround the fan and guide cooling air generated by the fan; wherein
the inspection door is configured such that, when the inspection door is in a closed state, a duct to guide cooling air generated by the fan to the air exit portion is defined by an opening edge portion of the shroud making contact with a portion of the inspection door that surrounds the air exit portion.

2. The swivel working machine according to claim 1, wherein
the inspection door includes, on an inner side thereof, an elastic body provided at the portion that surrounds the air exit portion; and
the elastic body is configured to, when the inspection door is in the closed state, be elastically deformed upon contact with the opening edge portion of the shroud to seal a contact area between the inspection door and the opening edge portion of the shroud.

3. The swivel working machine according to claim 1 or 2, wherein
the heat exchanger includes a radiator to cool cooling water to cool a to-be-cooled device and an oil cooler to cool hydraulic fluid to drive the working device, and the radiator and the oil cooler are arranged side by side on one surface of a rectangular frame body in parallel to an opening of the frame body;
the fan includes a radiator fan to cool the radiator and an oil cooler fan to cool the oil cooler, and the radiator fan and the oil cooler fan are arranged side by side in parallel to the opening of the frame body; and
the shroud includes a tubular fixed portion to surround both the radiator fan and the oil cooler fan and a guide portion extending from the fixed portion toward the air exit portion to guide cooling air generated by driving of the radiator fan and cooling air generated by driving of the oil cooler fan.

4. The swivel working machine according to claim 3, wherein
the fixed portion includes a rectangular-tubular frame including an upper edge portion, a left edge portion, a lower edge portion, and a right edge portion, and both the radiator fan and the oil cooler fan are surrounded by the rectangular-tubular frame; and
the fixed portion includes, at the lower edge portion, a first elastic support body to support a case lower portion corresponding to the radiator fan and a second elastic support body to support a case lower portion corresponding to the oil cooler fan.

5. The swivel working machine according to claim 4, wherein
the lower edge portion includes a first cutout portion in an area corresponding to the case lower portion corresponding to the radiator fan and a second cutout portion in an area corresponding to the case lower portion corresponding to the oil cooler fan; and
the first elastic support body is provided in the first cutout portion, and the second elastic support body is provided in the second cutout portion.

6. The swivel working machine according to claim 3, wherein
the fixed portion is a rectangular-tubular frame including an upper edge portion, a left edge portion, a lower edge portion, and a right edge portion, and both the radiator fan and the oil cooler fan are surrounded by the rectangular-tubular frame;
the air exit portion is sized to extend downward to a greater extent than an opening of the fixed portion;
the guide portion includes a downwardly-sloping extension portion extending diagonally outward and downward from an edge of the lower edge portion of the fixed portion; and
the downwardly-sloping extension portion makes contact with at least one of a lower edge portion of the air exit portion or an area radially outward of the lower edge portion.

7. The swivel working machine according to claim 6, wherein
the guide portion includes a right-side extension portion bent from an edge of the right edge portion of the fixed portion and extending in a radially inward direction of the opening of the fixed portion;
the inspection door includes an opening/closing shaft to allow the inspection door to be opened and closed with respect to the exterior cover, and the opening/closing shaft is provided at a position on the exterior cover that corresponds to the right edge portion of the fixed portion; and
the right-side extension portion projects from the fixed portion to a lesser extent than the downwardly-sloping extension portion.

8. The swivel working machine according to any one of claims 1 to 7, further comprising:
a battery unit;
an electric motor to be driven by electric power output by the battery unit;
a hydraulic pump to be driven by the electric motor to deliver hydraulic fluid;
a controller to control operation of the electric motor; and
a detector to detect opening and closing of the inspection door; wherein
the controller, when the detector detects an open state of the inspection door, drives the electric motor at a rotational speed lower than when the inspection door is in the closed state.

9. The swivel working machine according to any one of claims 1 to 8, further comprising:
a detector to detect opening and closing of the inspection door; and
a controller to control driving of the fan; wherein
the controller stops rotation of the fan when the detector detects an open state of the inspection door.

10. The swivel working machine according to any one of claims 3 to 6, wherein
the radiator includes, in an upper portion thereof, a water supply portion to be supplied with cooling water; and
the exterior cover includes a detachable lid portion in an area corresponding to the water supply portion independently of the inspection door.

11. The swivel working machine according to claim 8, further comprising an inverter to regulate electric power to be output to the electric motor; wherein
the battery unit is provided at a rear portion of the swivel base;
the inverter is provided above the battery unit;
the electric motor is provided at one side of the battery unit; and
the heat exchanger and the fan are provided above the electric motor.

12. The swivel working machine according to claim 11, wherein
the exterior cover includes an upper cover detachably attached to a support frame provided on the swivel base to cover the inverter and the battery unit.

13. The swivel working machine according to any one of claims 1 to 12, wherein
the air exit portion is provided at a position on the exterior cover that is located on one side of the machine body;
the cooling unit is provided in the space such that the cooling unit faces the air exit portion; and
the cooling unit includes:
a frame body having an opening;
a heat exchanger provided at a position on the frame body that corresponds to the opening of the frame body such that the heat exchanger faces toward the air exit portion;
a fan provided at the same side of the heat exchanger as the air exit portion such that an air intake side of the fan faces toward the heat exchanger and an air exit side of the fan faces toward the air exit portion; and
a mount portion provided on the opposite side of the frame body from the heat exchanger to detachably attach a filter thereto, the filter being configured to catch dust in air sucked toward the opening by the fan.

14. The swivel working machine according to claim 13, wherein
the mount portion is positioned to allow the filter to be attached and detached when the inspection door is open.

15. The swivel working machine according to any one of claims 12 to 14, wherein
the heat exchanger includes a radiator to cool cooling water to cool a to-be-cooled device and an oil cooler to cool hydraulic fluid to drive the working device which are arranged side by side in parallel to the opening of the frame body;
the fan includes a radiator fan to suck air through the radiator and an oil cooler fan to suck air through the oil cooler;
the filter includes a first filter for the radiator and a second filter for the oil cooler; and
the first filter is attached to a position on the mount portion that corresponds to the radiator, and the second filter is attached to a position on the mount portion that corresponds to the oil cooler.

16. The swivel working machine according to any one of claims 1 to 15, wherein
the cooling unit is a combined unit of a frame body having an opening, a heat exchanger attached to one side of the frame body at a position corresponding to the opening, a fan unit provided at the opposite side of the heat exchanger from the frame body such that an air intake side thereof faces toward the heat exchanger, and a shroud to guide exhaust air from the fan unit; and
the cooling unit is attached to a fixing bracket provided on a support frame provided on the swivel base.

17. The swivel working machine according to claim 16, wherein
the fixing bracket includes a temporary placement portion on which the cooling unit is temporarily placed during work of attaching the cooling unit.

18. The swivel working machine according to claim 17, wherein
the temporary placement portion is positioned such that a height position of the temporarily placed cooling unit matches a height at which the cooling unit is attached to the fixing bracket.

19. The swivel working machine according to any one of claims 16 to 18, wherein
the frame body includes a fixed portion which is fixed to the fixing bracket with a fastener to fix the cooling unit to the fixing bracket; and
the fixed portion is positioned such that the fixed portion does not overlap the heat exchanger, the fan unit, or the shroud when viewed from an air exit side of the cooling unit.

20. The swivel working machine according to any one of claims 1 to 19, further comprising:
a battery unit;
a cooling unit including a fan to suck air from a battery unit side and a heat exchanger to cool a to-be-cooled target using air sucked by the fan;
a detector to detect whether the battery unit is in a charged state or a discharged state; and
a controller to control driving of the fan; wherein
the controller drives the fan at a predetermined first rotational speed when the detector detects the charged state of the battery unit.
